(19) Europäisches Patentamt
European Patent Office
Office européen des brevets

(11) **EP 4 045 264 B1**

(12) **EUROPÄISCHE PATENTSCHRIFT**

(45) Veröffentlichungstag und Bekanntmachung des Hinweises auf die Patenterteilung:
**14.08.2024   Patentblatt 2024/33**

(21) Anmeldenummer: **20789155.7**

(22) Anmeldetag: **13.10.2020**

(51) Internationale Patentklassifikation (IPC):
**B29C 45/16** *(2006.01)*    **B29C 45/18** *(2006.01)*
**B29C 45/20** *(2006.01)*    **B29C 45/58** *(2006.01)*

(52) Gemeinsame Patentklassifikation (CPC):
**B29C 45/1634; B29C 45/1858; B29C 45/20; B29C 45/581**

(86) Internationale Anmeldenummer:
**PCT/EP2020/078776**

(87) Internationale Veröffentlichungsnummer:
**WO 2021/074150 (22.04.2021 Gazette 2021/16)**

(54) **VERFAHREN UND VORRICHTUNG ZUR HERSTELLUNG VON MARMORIERTEN FORMTEILEN UND VERFAHREN ZUR HERSTELLUNG DER VORRICHTUNG**

METHOD AND DEVICE FOR PRODUCING MARBLED MOULDED PARTS AND METHOD FOR PRODUCING SAID DEVICE

PROCÉDÉ ET DISPOSITIF DE FABRICATION DE PIÈCES MOULÉES MARBRÉES ET PROCÉDÉ DE FABRICATION DUDIT DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019   EP 19203163**
**05.05.2020   EP 20172936**

(43) Veröffentlichungstag der Anmeldung:
**24.08.2022   Patentblatt 2022/34**

(73) Patentinhaber: **BASF SE**
**67056 Ludwigshafen am Rhein (DE)**

(72) Erfinder:
- **JAKOBI, Reinhard**
  **67056 Ludwigshafen (DE)**
- **HOMES, Angelika**
  **67056 Ludwigshafen (DE)**
- **ZEIHER, Susanne**
  **67056 Ludwighafen (DE)**
- **LEUTZ, Daniel**
  **67056 Ludwigshafen (DE)**
- **MEIERHOEFER, Natascha Manuela**
  **67056 Ludwigshafen (DE)**
- **GIMENEZ CASAT, Rafael**
  **67056 Ludwigshafen (DE)**
- **IMO, Marcus**
  **67056 Ludwigshafen (DE)**
- **SCHWENDY, Sascha Tim**
  **67056 Ludwgshafen (DE)**
- **ULLRICH, Leonhard**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
WO-A1-97/20674          DE-A1- 1 933 570
GB-A- 2 028 218         JP-A- H10 168 253
JP-A- H11 138 530       JP-A- S57 203 524
US-A1- 2015 110 918

- STUECK D: "Verweilzeit im Griff", PLASTVERARBEITER, HUETHIG GMBH, HEIDELBERG, DE, vol. 54, no. 4, 1 January 2003 (2003-01-01), pages 56 - 57, XP009011004, ISSN: 0032-1338

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 045 264 B1

**Beschreibung**

Die Erfindung betrifft ein Verfahren zur Herstellung von marmorierten Formteilen, wobei eine erste Formmasse und mindestens eine weitere Formmasse aus einer Einspritzeinheit einer Schneckenspritzgussmaschine in ein Spritzgusswerkzeug eingespritzt werden, wobei die Einspritzeinheit einen Hohlzylinder, eine Schnecke mit einer Schneckenspitze und eine Düse umfasst und die Schnecke rotierbar und in Richtung einer Längsachse des Hohlzylinders zwischen einer vorderen Stellung und einer hinteren Stellung beweglich in dem Hohlzylinder angeordnet ist, wobei ein Abstand zwischen der Schneckenspitze und der Düse in der vorderen Stellung kleiner ist als in der hinteren Stellung, und wobei die erste Formmasse eine erste Polymermasse und ein erstes Färbemittel enthält und die mindestens eine weitere Formmasse mindestens eine weitere Polymermasse und gegebenenfalls mindestens ein weiteres Färbemittel enthält.

Die Erfindung betrifft ferner eine Vorrichtung zur Herstellung von marmorierten Formteilen umfassend eine Einspritzeinheit, die einen Hohlzylinder mit einem Innenraum, eine Schnecke und eine Düse mit einem Düsenkopf und einem Düsenkörper umfasst, wobei die Schnecke, die auch als Förderschnecke bezeichnet werden kann, rotierbar und in Richtung einer Längsachse des Hohlzylinders zwischen einer vorderen Stellung und einer hinteren Stellung beweglich in dem Hohlzylinder angeordnet ist, sowie ein Verfahren zur Herstellung der Vorrichtung.

Ein marmoriertes Formteil weist typischerweise mindestens eine marmorierte, also gemusterte Sichtfläche auf, die Oberflächeneffekte wie Farbschattierungen, farbige Schlieren, Linien und Strukturen zeigt. In marmorierten Formteilen ist zumindest ein Teil von enthaltenen Färbemitteln nicht gleichmäßig verteilt. Die Ausbildung der Marmorierungseffekte ist von den Anteilen verschiedener Farben sowie der Grundfarbe des Formteils abhängig. Marmorierte Formteile sind häufig optisch nicht vollständig identisch. Wenn sie ein wiederkehrendes Erkennungsmuster in der Farbstruktur erkennen lassen, können sie auch als Formteile mit reproduzierbarer Marmorierung bezeichnet werden. Insbesondere die Grundfarbe, die Schattierungen und das Grundmuster liegen an reproduzierbar marmorierten Formteilen wiederkehrend vor, wobei Abweichungen in der Helligkeit der Farbgebung auftreten können.

Zur Herstellung von Formteilen, insbesondere Kunststoff-Formteilen aus Pulvern, Granulaten oder Formmassen, die jeweils als Mischungen vorliegen können, werden häufig Schneckenspritzgussmaschinen eingesetzt. Für die Herstellung von farbigen Kunststoffteilen wird häufig eingefärbtes Kunststoffgranulat verwendet oder farbneutrales Granulat mit eingefärbtem Kunststoffgranulat mit hoher Pigmentkonzentration vor oder während der Verflüssigung des Kunststoffs in einem Extruder gemischt. Üblicherweise werden Mischelemente in Einspritzeinheiten eingesetzt, die dafür sorgen, dass sich die Mischungen, bestehend aus einem nicht eingefärbten Basismaterial und einem eingefärbten, eine hohe Konzentration an Färbemitteln enthaltenden Granulat, möglichst homogen mischen und Bauteile ohne Schlieren auf der Oberfläche erzeugt werden.

Schneckenspritzgussmaschinen ermöglichen üblicherweise eine gleichmäßige Plastifizierung, bei der die einzuspritzende Formmasse eine gleichmäßige Temperatur besitzt. Bei der Herstellung von marmorierten Formteilen ist diese Homogenisierung insofern unerwünscht, als dass zwar die Temperatur gleichmäßig ist, die einzuspritzende Formmasse aber nicht vollständig durchmischt ist, so dass noch wechselnde farbliche Komponenten im Fertigteil sichtbar bleiben.

Gerade zur Herstellung von reproduzierbaren Marmorierungsmustern, bei denen eine gleichförmige Wiederholung des Farbverlaufs und der Farbverteilung angestrebt wird, werden üblicherweise Maschinen eingesetzt, in denen mindestens zwei die Marmorierung erzeugende Komponenten getrennt, beispielsweise auf zwei separaten Spritzeinheiten, dem Spritzgusswerkzeug zugeführt werden.

Zur Herstellung von marmorierten Formteilen sind ferner Vorrichtungen bekannt, insbesondere Düsen, die es ermöglichen, Formmassen aus zwei getrennten Einspritzeinheiten in einem Spritzgusswerkzeug zu vereinen.

Die Herstellung von reproduzierbar marmorierten Formteilen in Zwei-Komponenten-Spritzgussmaschinen ist aufwendig, da zwei Spritzeinheiten benötigt werden und betrieben werden müssen, die jeweils eine Schnecke, einen Zylinder, Zuführvorrichtungen und entsprechende Hydraulik zur Bewegung der Schnecke aufweisen.

Darüber hinaus sind Einsätze für Hohlzylinder von Spritzgussschneckenmaschinen üblicherweise mit modifizierter Schnecke bekannt, die die Herstellung von marmorierten Formteilen auf einer Ein-Komponenten-Spritzgussmaschine erlauben, aber keine Reproduzierbarkeit von Marmorierungsmustern gewährleisten.

DE 19 33 570 A1 beschreibt ein Verfahren und eine Vorrichtung zur Herstellung von marmorierten Formteilen.

AT 406 753 B beschreibt die Verwendung von einer Düse vorgeschalteten Verdrängungskörpern, die als Torpedos bekannt sind. Die Verdrängungskörper weisen eine unterschiedliche Oberflächengestaltung auf und werden zur Erzeugung von Marmoriereffekten verwendet. Durch den Einsatz von Kurzschnecken mit Torpedos werden inhomogene Schmelzen erzeugt, die den Marmorereffekt bewirken.

DE 27 14 509 A1 hat eine Vorrichtung zur Herstellung von marmorierten Formteilen aus Kunststoffmaterial zum Gegenstand, wobei eine Einzonen-Kurzschnecke eingesetzt wird, an die sich in einer beheizbaren Zone eines Zylinders ein Verdrängungskörper anschließt.

US 4,176,152 beschreibt eine Spritzgussmaschine mit einem Zylinder und einer hin- und hergehenden rotierbaren Schnecke. Ein Wärmeübergangs- und Stratifikationskörper ist zwischen der Schnecke und einem Auslass des Zylinders angeordnet. Der Körper weist insbesondere eine Rippenstruktur auf seinem äußeren Umfang auf.

DE 42 04 015 A1 offenbart eine Spritzdüse für eine thermoplastische Masse, die aus einem Düsenkopf und einem Basisteil besteht. Der Düsenkopf ist axial verschiebbar, so dass eine in eine axiale Bohrung mündende zweite Bohrung zur Zufuhr einer zweiten thermoplastischen Formmasse geöffnet und verschlossen werden kann.

DE 10 2004 053 575 A1 betrifft ebenfalls eine Düse für Spritzgussmaschinen, wobei Harze zweier verschiedener Zusammensetzungen und unterschiedlicher Farbe verarbeitet werden. Ein erster Durchgang in der Düse kommuniziert mit einer ersten Einspritzeinheit und ein zweiter Durchgang in der Düse kommuniziert mit einer zweiten Einspritzeinheit.

Auch JP 2003 200456 und JP 2005 262759 beschreiben Düsen zum Einspritzen von zwei verschiedenen Harzen, die zwei getrennten Plastifiziereinheiten entstammen.

TW 411314 B hat ein Verfahren zur Herstellung von Kunststoffartikeln mit Farbverlauf zum Gegenstand, wobei eine konische Düse eingesetzt wird.

DE 43 32 242 A1 offenbart ein Verfahren und eine Vorrichtung zur Herstellung von marmorierten Kunststoffobjekten mittels eines Spritzgussverfahrens, wobei Farbpigmente an einer Einführungsöffnung am Schneckenganganfang zugeführt werden.

DE 100 13 617 A1 ist auf ein Verfahren zur Herstellung eines Kunststoffteils mit mindestens einer marmorierten Sichtfläche gerichtet. Dazu werden der Masse eines thermoplastischen Kunststoffs vor oder während der Verflüssigung durch Magnetfeldeinwirkung ausrichtbare Festkörperteilchen zugesetzt.

EP 1 556 198 B1 beschreibt ein Mischelement, das eine Rückstromsperre an der Schneckenspitze einer Spritzgussmaschine ersetzen kann.

Aufgabe der vorliegenden Erfindung ist es ein Verfahren zur Herstellung von marmorierten Formteilen bereitzustellen, wobei das erzeugte Marmorierungsmuster reproduzierbar ist. Ferner wird eine Vorrichtung zur Herstellung von marmorierten Formteilen vorgeschlagen, mit der die Gestaltung des Marmorierungsmusters gezielt variierbar ist und gleichzeitig eine hohe Ausprägung und Reproduzierbarkeit des Marmorierungsmusters realisiert wird und ein Einsatz derselben Schneckenspritzgussmaschinen für unterschiedliche Muster mit geringem Modifikationsaufwand möglich ist.

Gelöst wird die Aufgabe durch ein Verfahren zur Herstellung von marmorierten Formteilen gemäß dem beigefügten Anspruch 1.

Darüber hinaus werden eine Vorrichtung zur Herstellung von marmorierten Formteilen gemäß dem beigefügten Anspruch 8 sowie ein Verfahren zur Herstellung dieser Vorrichtung gemäß dem beigefügten Anspruch 13 vorgeschlagen.

Die Vorrichtung wird zur Durchführung des erfindungsgemäßen Verfahrens zur Herstellung von marmorierten Formteilen eingesetzt. Die Vorrichtung ist eine Spritzgussmaschine, namentlich eine Ein-Komponenten-Spritzgussmaschine.

Durch die zeitliche oder räumliche Trennung der Zuführung der ersten Formmasse und der mindestens einen weiteren Formmasse wird die Homogenisierung von der ersten Formmasse und der mindestens einen weiteren Formmasse während des Plastifizierens limitiert, so dass definierte Farbgrenzen und reproduzierbare Marmorierungsmuster im hergestellten Formteil sichtbar sind. Die Zugabe der ersten Formmasse und der mindestens einen weiteren Formmasse kann auch als sequentiell oder diskret bezeichnet werden. Entsprechend liegt die erste Formmasse inhomogen verteilt in der mindestens einen weiteren Formmasse vor dem Einspritzen in dem Freiraum zwischen der Düse und der Schneckenspitze vor.

In Abhängigkeit der Geometrie der Düse stellt sich ein definiertes, reproduzierbares, also wiederholt herstellbares Muster auf mindestens einer Sichtfläche des hergestellten marmorierten Formteils ein.

Als reproduzierbare Marmorierungsmuster werden Muster verstanden, deren Abweichungen, wenn unterschiedliche Formteile miteinander verglichen werden, für das menschliche Auge nicht als deutlich unterschiedlich wahrgenommen werden, wenn sie mit demselben Verfahren und derselben Vorrichtung erzeugt wurden. Die erfindungsgemäß hergestellten Formteile weisen Muster auf, die zuverlässig wiederkehren und erkennbar sind. Dies wird insbesondere durch die definierte Zuführung der Formmassen erzielt.

Die erfindungsgemäß hergestellten marmorierten Formteile sind insbesondere für dekorative Zwecke im Verbrauchsgüterbereich einsetzbar. Die marmorierten Formteile können vollständig marmoriert ausgeführt sein oder mindestens eine marmorierte Sichtfläche umfassen. Die marmorierten Formteile können dreidimensional oder flächig ausgebildet sein. Bevorzugt sind die marmorierten Formteile Haushaltsgegenstände wie Schalen, Teller, Becher, Griffe oder Toilettensitze, Konsumgüter wie Laptop-Cover oder Schutzhüllen für Telefone oder Smartphones, Spielwaren wie Kreiselscheiben oder Kreisel, Accessoires in der Modebranche wie Knöpfe oder dekorative Elemente im Fahrzeuginnenraum wie Sichtblenden oder Abdeckungen.

Die erste Formmasse und die mindestens eine weitere Formmasse werden dem Hohlzylinder der Einspritzeinheit zugeführt und durch Rotation der Schnecke in Förderrichtung nach vorne zu der Düse hin gefördert. Dabei werden die erste Formmasse und die mindestens eine weitere Formmasse zumindest teilweise, bevorzugt vollständig, plastifiziert. Die mindestens eine weitere Formmasse und gegebenenfalls die erste Formmasse stauen sich in dem Freiraum zwischen der Düse und der Schneckenspitze und schieben die Schnecke axial nach hinten in die hintere Stellung in dem Hohlzylinder. Bevorzugt umfasst die im erfindungsgemäßen Verfahren eingesetzte Schneckenspritzgussmaschine genau eine Einspritzeinheit und mehr bevorzugt genau einen Hohlzylinder und weiter bevorzugt genau eine Schnecke. Die erfindungsgemäße Vorrichtung umfasst genau einen Hohlzylinder und weiter genau eine Schnecke.

Das Zuführen kann auch als Dosieren bezeichnet werden, wobei die erste Formmasse beziehungsweise die mindestens eine weitere Formmasse beispielsweise über einen Trichter in den Hohlzylinder und insbesondere auf die Schnecke gelangen. Die erste Formmasse und die mindestens eine weitere Formmasse werden portionsweise zeitlich oder räumlich voneinander getrennt zugeführt. Portionsweise bedeutet, dass die erste Formmasse und bevorzugt auch die mindestens eine weitere Formmasse diskontinuierlich in Form von diskreten Portionen, also in Form der ersten Menge beziehungsweise der zweiten Menge, dem Hohlzylinder zugeführt werden.

Das Plastifizieren wird auch als Aufdosieren bezeichnet, wobei die erste Formmasse und die mindestens eine weitere Formmasse in Richtung der Düse von der Schnecke gefördert und dabei zumindest teilweise aufgeschmolzen werden. Bevorzugt werden zumindest ein Teil der ersten Formmasse und zumindest ein Teil der mindestens einen weiteren Formmasse vollständig während des Plastifizierens in Schritt d) aufgeschmolzen.

Das Zuführen der zweiten Menge der mindestens einen weiteren Formmasse in Schritt c) wird nach dem Vorschießen der Schnecke in Schritt b) durchgeführt.

Weiter bevorzugt ist das Zuführen der neuen ersten Menge der ersten Formmasse in Schritt e) und gegebenenfalls das Zuführen der ersten Menge der ersten Formmasse in Schritt a) abgeschlossen, bevor das Vorschießen in Schritt b) beginnt. Weiterhin ist bevorzugt das Vorschießen in Schritt b) abgeschlossen, bevor das Zuführen der zweiten Menge der mindestens einen weiteren Formmasse in Schritt c) beginnt.

Bevorzugt kommt die erste Formmasse erst mit der Schnecke und dann mit der mindestens einen weiteren Formmasse in Kontakt.

Die erste Formmasse und/oder die mindestens eine weitere Formmasse können mit einem Dosiersystem separat direkt in den Hohlzylinder und insbesondere direkt auf die Schnecke zugeführt werden.

Weiter bevorzugt beginnt das Zuführen der zweiten Menge der mindestens einen weiteren Formmasse, wenn sich die Schnecke in der vorderen Stellung befindet. Die Schnecke befindet sich bevorzugt in der vorderen Stellung, wenn sie maximal in Richtung der Düse bewegt wurde.

Die mindestens eine weitere Formmasse, insbesondere die zweite Menge der mindestens einen weiteren Formmasse, kann kontinuierlich zugeführt werden. Bevorzugt wird die zweite Menge der mindestens einen weiteren Formmasse zumindest während des Plastifizierens in Schritt d) kontinuierlich zugeführt.

Insbesondere, wenn die neue erste Menge der ersten Formmasse in Schritt e) und gegebenenfalls die erste Menge der ersten Formmasse in Schritt a) räumlich separat von dem Zuführen der zweiten Menge der mindestens einen weiteren Formmasse in Schritt c) zugeführt werden, kann die zweite Menge der mindestens einen weiteren Formmasse während dem Zuführen der neuen ersten Menge der ersten Formmasse in Schritt e) und gegebenenfalls während dem Zuführen der ersten Menge der ersten Formmasse in Schritt a) kontinuierlich zugeführt werden.

Wenn die neue erste Menge der ersten Formmasse in Schritt e) und gegebenenfalls die erste Menge der ersten Formmasse in Schritt a) räumlich separat von dem Zuführen der zweiten Menge der mindestens einen weiteren Formmasse in Schritt c) durchgeführt werden, wird die neue erste Menge oder die erste Menge der ersten Formmasse bevorzugt mit einem größeren Abstand zur Düse zugeführt als die zweite Menge der mindestens einen weiteren Formmasse.

Nach dem Plastifizieren wird bevorzugt die Rotation der Schnecke gestoppt, und die Schnecke wird in Förderrichtung nach vorn in die vordere Stellung bewegt, so dass die plastifizierte erste Formmasse und die plastifizierte mindestens eine weitere Formmasse durch die Düse in die Kavität, die auch als Innenraum bezeichnet werden kann, des Spritzgusswerkzeugs gedrückt werden.

Durch das Zuführen der neuen ersten Menge der ersten Formmasse auf die Schnecke, in dem Moment, wenn sich die Schnecke in der hinteren Stellung befindet, wird eine Synchronisation der Musterbildung zum Rhythmus oder Takt des Einspritzvorgangs erreicht und somit die Reproduzierbarkeit des Musters auf nacheinander hergestellten marmorierten Formteilen sichergestellt. Mehr bevorzugt ist die Schnecke in der hinteren Stellung in Ruhe, während die erste Menge der ersten Formmasse zugeführt wird.

Das Volumen der plastifizierten Formmasse umfassend die mindestens eine weitere Formmasse und gegebenenfalls die erste Formmasse, die sich vor dem Einspritzen in dem Freiraum zwischen der Düse und der Schneckenspitze befindet, wird auch als Schussvolumen bezeichnet.

Im Anschluss an das Einspritzen in Schritt f) wird der Hohlzylinder wieder befüllt. Die zweite Menge der mindestens einen weiteren Formmasse wird zugeführt, es wird erneut plastifiziert und die Schnecke bewegt sich zurück in die hintere Stellung. Danach wird die erste Menge der ersten Formmasse zugeführt und es wird erneut eingespritzt.

Bevorzugt ist das Plastifizieren bereits mindestens einmal, mehr bevorzugt mindestens zweimal, insbesondere mindestens viermal mit der mindestens einen weiteren Formmasse und gegebenenfalls mit der ersten Formmasse abgeschlossen, wenn die erste Menge der ersten Formmasse in Schritt a) zugeführt wird. Bevorzugt befinden sich bereits die mindestens eine weitere Formmasse und gegebenenfalls die erste Formmasse in dem Hohlzylinder, wenn die erste Menge der ersten Formmasse in Schritt a) zugeführt wird.

Bevorzugt werden die erste Formmasse und/oder die mindestens eine weitere Formmasse einem hinteren Teil des Hohlzylinders zugeführt. Als hinterer Teil wird auf einer der Düse abgewandten Seite des Hohlzylinders bevorzugt nicht mehr als 50% einer Gesamtlänge des Hohlzylinders, mehr bevorzugt nicht mehr als 20% einer Gesamtlänge des Hohlzylinders verstanden. Die erste Formmasse und die mindestens eine weitere Formmasse können dem Hohlzylinder an derselben oder an verschiedenen Positionen beziehungsweise Zuführöffnungen zugeführt werden. Insbesondere werden die erste Formmasse und die mindestens eine weitere Formmasse dem Hohlzylinder an verschiedenen Positionen in derselben Zuführöffnung zugeführt.

Die erste Formmasse und die mindestens eine weitere Formmasse können in Form von Pulvern, Granulaten oder plastischen Massen zugeführt werden. Die erste Formmasse und/oder die mindestens eine weitere Formmasse können jeweils als homogene und/oder heterogene Mischung vorliegen.

Bevorzugt werden die erste Formmasse und/oder die mindestens eine weitere Formmasse als Granulat zugeführt. Als Granulat bezeichnet man im Allgemeinen einen rieselfähigen Feststoff, der beispielsweise zylinderförmig oder linsenförmig ist und bevorzugt eine maximale Länge von 1 mm bis 10 mm, mehr bevorzugt von 3 mm bis 6 mm aufweist.

Bevorzugt umfasst die erste Formmasse ein erstes Granulat, das die erste Polymermasse und das erste Färbemittel enthält. Das erste Granulat kann auch als eingefärbtes Granulat bezeichnet werden, das bevorzugt in einem vorgelagerten Schritt hergestellt wird. Die erste Formmasse kann auch als Marmorierungsbatch oder Konzentrat bezeichnet werden.

Insbesondere die mindestens eine weitere Formmasse kann vor der Zuführung eine Mischung umfassen, die mindestens zwei weitere Granulate aufweist, insbesondere ein zweites Granulat und ein drittes Granulat. Die mindestens eine weitere Polymermasse kann in dem zweiten Granulat und das mindestens eine weitere Färbemittel kann in dem dritten Granulat enthalten sein.

Bevorzugt besteht das marmorierte Formteil aus der ersten Formmasse und der mindestens einen weiteren Formmasse.

Bevorzugt weist die Schnecke eine Einzugszone, eine Kompressionszone und eine Meteringzone, die auch als Ausstoßzone oder Homogenisierungszone bezeichnet werden kann, auf.

Die Schnecke ist bevorzugt eine eingängige Schnecke. Die Schnecke weist insbesondere genau einen Gang auf, in dem die erste Formmasse und die mindestens eine weitere Formmasse gefördert werden. Weiter bevorzugt weist die Schnecke einen flachen Schneckengang auf. Die Gangtiefe in der Einzugszone beträgt bevorzugt das 0,05- bis 0,15-fache des äußeren Schneckendurchmessers und die Gangtiefe in der Meteringzone das 0,025- bis 0,075-fache des äußeren Schneckendurchmessers. Ein Kompressionsverhältnis, das ein Verhältnis zwischen einem Gangvolumen der Einzugszone der Schnecke zu einem Gangvolumen der Meteringzone der Schnecke bezeichnet, beträgt bevorzugt mindestens 2, mehr bevorzugt mehr als 2. Bevorzugt weist die Schnecke eine Länge in einem Bereich von dem 20-fachen bis 23-fachen des äußeren Schneckendurchmessers auf. Ein niedriger Schneckengang bietet den Vorteil, dass weniger Material bei gleichem Durchmesser aufgenommen wird.

Die Schnecke der erfindungsgemäßen Vorrichtung kann eine Rückstromsperre umfassen, die bevorzugt zwischen der Düse und dem Schneckengang angeordnet ist. Die Schneckenspitze kann Flügel, insbesondere 3 bis 4 Flügel, aufweisen.

Die Einspritzeinheit umfasst bevorzugt eine Heizvorrichtung. Die Heizvorrichtung kann den Hohlzylinder vollständig, bevorzugt teilweise, umschließen. Auch die Düse kann eine Heizvorrichtung aufweisen. Die Heizvorrichtung unterstützt das Aufschmelzen der ersten Formmasse und der mindestens einen weiteren Formmasse.

Bevorzugt wird das Abkühlen der ersten Formmasse und der mindestens einen weiteren Formmasse in dem Spritzgusswerkzeug in Schritt g) zeitgleich mit dem Plastifizieren der ersten Formmasse und der mindestens einen weiteren Formmasse in dem Hohlzylinder in Schritt d) und gegebenenfalls zumindest teilweise zeitgleich mit dem Zuführen der zweiten Menge der mindestens einen weiteren Formmasse in Schritt c) durchgeführt.

Bevorzugt werden die Schritte c) bis h) mehr als einmal wiederholt, mehr bevorzugt mehr als dreimal, weiter bevorzugt mehr als viermal und insbesondere bevorzugt mehr als fünfmal, um mehrere marmorierte Formteile hintereinander herzustellen. Bevorzugt werden die Schritte a) bis f) in der angegebenen Reihenfolge durchgeführt.

Ferner wird das Einspritzen in Schritt f) bevorzugt mit einer Einspritzfrequenz wiederholt, wobei jedes Einspritzen oder Vorschießen als ein Schuss bezeichnet werden kann. Weiterhin wird das Zuführen der neuen ersten Menge der ersten Formmasse in Schritt e) bevorzugt mit einer Zuführfrequenz wiederholt. Bevorzugt wird die Zuführfrequenz so gewählt, dass sie nicht mehr als 10%, weiter bevorzugt nicht mehr als 5% und insbesondere bevorzugt nicht mehr als 1%, von der Einspritzfrequenz abweicht. Entsprechend wird das Zuführen der neuen ersten Menge der ersten Formmasse in Schritt e) insbesondere bevorzugt im Takt des Einspritzens in Schritt f) durchgeführt. Hierbei wird das Zuführen der neuen ersten Menge der ersten Formmasse in Schritt e) bevorzugt zeitlich versetzt zum Einspritzen in Schritt f) ausgeführt. Mehr bevorzugt ist die Zuführfrequenz gleich der Einspritzfrequenz. In diesem Fall wird die erste Menge der ersten Formmasse immer im gleichen zeitlichen Versatz zum Einspritzen beziehungsweise Vorstoßen ausgeführt.

Für ein marmoriertes Formteil kann das Zuführen der neuen ersten Menge der ersten Formmasse in Schritt e) und/oder das Zuführen der ersten Menge der ersten Formmasse in Schritt a) vor oder nach dem Zuführen der zweiten Menge der mindestens einen weiteren Formmasse in Schritt c) durchgeführt werden.

Neben der ersten Formmasse können dem Hohlzylinder auch mindestens zwei weitere Formmassen zugeführt werden, wodurch mehrfarbige Formteile erzeugt werden können, die zusätzlich ein Marmorierungsmuster aufweisen. Die mindestens eine weitere Formmasse kann in mehrere Portionen aufgeteilt werden, wobei die mehreren Portionen bevorzugt jeweils sukzessive also schrittweise nacheinander zugeführt werden.

Das Spritzgusswerkzeug kann einen Anguss verschiedenen Typs umfassen. Bevorzugt umfasst das Spritzgusswerkzeug einen Anguss ausgewählt aus der Gruppe bestehend aus einem Heißkanal, einem Kegelanguss, einem Bandanguss, einem Verteiler und einem Tunnelanguss. Bevorzugt weist das Spritzgusswerkzeug einen Kegelanguss auf.

Nach dem Einspritzen in Schritt f) kann ein Nachdruck von der Schnecke auf das Formteil in dem Spritzgusswerkzeug ausgeübt werden. Bevorzugt wird der Nachdruck vor dem Plastifizieren in Schritt d) ausgeübt. Während ein Nachdruck von der Schnecke auf das Formteil in dem Spritzgusswerkzeug ausgeübt wird, befindet sich die Schnecke bevorzugt in der vorderen Stellung im Hohlzylinder oder noch in Bewegung in Förderrichtung, um mehr plastifizierte Formmasse in das Spritzgusswerkzeug zu drücken, so dass Materialschwindungen beim Abkühlen des Formteils ausgeglichen werden.

Bevorzugt wird die zweite Menge der mindestens einen weiteren Formmasse in Schritt c) zugeführt, während der Nachdruck auf das Spritzgusswerkzeug ausgeübt wird. Mehr bevorzugt wird die zweite Menge der mindestens einen weiteren Formmasse in Schritt c) zugeführt, wenn mit der Ausübung des Nachdrucks begonnen wird.

Bevorzugt beträgt ein Verhältnis von einem maximalen inneren freien Volumen des Hohlzylinders, das von der erster Formmasse und der mindestens einen weiteren Formmasse eingenommen werden kann, zu einem inneren Volumen der Kavität nicht mehr als 15, mehr bevorzugt nicht mehr als 10, weiter bevorzugt nicht mehr als 5 und insbesondere von 2 bis 5. Das maximale innere freie Volumen des Hohlzylinders kann auch als Schmelzekanal bezeichnet werden. Bevorzugt beschreibt das maximale innere freie Volumen des Hohlzylinders das zylinderförmige innere Volumen des Hohlzylinders abzüglich des Volumens, das von der Schnecke eingenommen wird, die sich in dem Hohlzylinder befindet.

Bevorzugt ist das innere freie Volumen unterhalb der Zuführöffnung und insbesondere auf der Schnecke nur zu 0 Vol.-% bis 80 Vol.-%, mehr bevorzugt von 10 Vol.-% bis 50 Vol.-% mit der ersten Formmasse und/oder der mindestens einen weiteren Formmasse beziehungsweise mit dem Granulat der ersten Formmasse und/oder dem Granulat der mindestens einen weiteren Formmasse gefüllt. Dies kann auch als Unterfütterung bezeichnet werden, wobei die erste Formmasse und die mindestens eine weitere Formmasse mit reduziertem Massenstrom zugeführt werden im Vergleich zu einem maximal mit der Schnecke förderbaren Massenstrom.

Entsprechend sind der Hohlzylinder und die Schnecke so ausgelegt, dass sich bevorzugt nicht mehr als 15, mehr bevorzugt nicht mehr als 10, weiter bevorzugt nicht mehr als 5 und insbesondere von 2 bis 5 Schuss, insbesondere vor dem Einspritzen, in der Einspritzeinheit befinden.

Durch ein geringes inneres freies Volumen des Hohlzylinders ergibt sich eine kürzere Verweilzeit für die erste Formmasse und die mindestens eine weitere Formmasse in der Einspritzeinheit, was einer homogenen Durchmischung der ersten Formmasse und der mindestens einen weiteren Formmasse entgegenwirkt und somit die Erzeugung eines Marmorierungsmusters fördert. Die Verweilzeit der ersten Formmasse und/oder der mindestens einen weiteren Formmasse in dem Hohlzylinder liegt bevorzugt in einem Bereich von 1 Sekunde bis 15 Minuten, mehr bevorzugt von 0,1 Minuten bis 4 Minuten, insbesondere bevorzugt von 0,5 Minuten bis 2 Minuten.

Durch das erfindungsgemäße Verfahren wird die erste Formmasse so spät wie möglich mit der mindestens einen weiteren Formmasse in dem Hohlzylinder in Kontakt gebracht, um das Ausmaß der Durchmischung möglichst zu beschränken. Auch die Reduzierung der Verweilzeit durch ein entsprechendes kleines inneres freies Volumen des Hohlzylinders minimiert die Durchmischung von der ersten Formmasse mit der mindestens einen weiteren Formmasse.

Bevorzugt beträgt ein Verhältnis von der Summe aus der Masse der ersten Menge der ersten Formmasse und der Masse der zweiten Menge der mindestens einen weiteren Formmasse zu der Masse des marmorierten Formteils 0,5 bis 1,5, mehr bevorzugt 0,8 bis 1,2, weiter bevorzugt 0,9 bis 1, insbesondere 1. Dieses Verhältnis ist zum Beispiel größer als 1, wenn bei der Herstellung des marmorierten Formteils mindestens ein Anguss vorliegt, der auch die erste Formmasse und die weitere Formmasse umfasst, aber nach der Herstellung von dem marmorierten Formteil entfernt wird und nicht Teil des marmorierten Formteils ist. Ein Verhältnis von kleiner als 1 kann zum Beispiel vorliegen, wenn Einleger, insbesondere Metalleinleger, in das Formteil integriert werden oder Zwei-Komponenten-Formteile, die unterschiedliche Härten aufweisen können, erzeugt werden, bei denen zunächst eine erste Komponente und dann ein zweite Komponente in die Kavität gespritzt wird, wobei die erste Komponenten und/oder die zweite Komponente eine Marmorierung aufweisen. Durch ein Verhältnis nahe 1 ist die Marmorierung, insbesondere einzelne Elemente des Marmorierungsmuster wie Ringe oder Spitzen, an hintereinander hergestellten marmorierten Formteilen örtlich vergleichbar positioniert, die Reproduzierbarkeit der Marmorierung über verschiedene marmorierte Formteile wird also optimiert, insbesondere, da die spezifischen Massenverhältnisse an die Größe des Formteils und den Rhythmus des Einspritzens angepasst sind. Ein Überdecken verschiedener Muster aus verschiedenen Einspritzvorgängen wird vermieden.

Entsprechend ist bevorzugt, dass jeder Schuss einzeln zugegeben wird, wobei die erste Formmasse für einen Schuss und die mindestens eine weitere Formmasse für denselben Schuss in den räumlich oder örtlich getrennten Schritten e) und gegebenenfalls a) beziehungsweise c) zugeführt werden. Die Zugabe der ersten Formmasse und der mindestens einen weiteren Formmasse erfolgt bevorzugt in konkreten Mengen, wobei die erste Menge beziehungsweise die zweite Menge ausreichend für genau einen Schuss ist.

Bevorzugt beträgt ein Massenverhältnis von der ersten Menge zu der zweiten Menge weniger als 0,1, mehr bevorzugt weniger als 0,01 und insbesondere weniger als 0,001. Die erste Formmasse dient der Ausbildung des Marmorierungsmusters in der mindestens einen weiteren Formmasse, die die Basismasse darstellt.

Bevorzugt beträgt ein Verhältnis von einer ersten Konzentration des ersten Färbemittels in der ersten Formmasse zu einer weiteren Konzentration des mindestens einen weiteren Färbemittels in der mindestens einen weiteren Formmasse mehr als 20, mehr bevorzugt mehr als 50 und insbesondere mehr als 100. Entsprechend ist es bevorzugt, wenn das erste Färbemittel in der ersten Formmasse höher konzentriert ist als das mindestens eine weitere Färbemittel, das gegebenenfalls in der mindestens einen weiteren Formmasse enthalten ist. Die mindestens eine weitere Formmasse kann bereits mit dem mindestens einen weiteren Färbemittel eingefärbt sein, bevor die mindestens eine weitere Formmasse mit der ersten Formmasse in Kontakt kommt.

Bevorzugt enthält die erste Formmasse 10 Gew.-% bis 60 Gew.-%, mehr bevorzugt 20 Gew.-% bis 40 Gew.-%, bezogen auf die erste Formmasse, des ersten Färbemittels. Die mindestens eine weitere Formmasse enthält bevorzugt 0,1 Gew.-% bis 6 Gew.-%, mehr bevorzugt 0,2 Gew.-% bis 4 Gew.-%, bezogen auf die mindestens eine weitere Formmasse, des mindestens einen weiteren Färbemittels.

Durch die genannten Konzentrationsverhältnisse ist eine gute Erkennbarkeit und Schärfe des Marmorierungsmusters gewährleistet, was die Reproduzierbarkeit der Muster unterstützt.

Die zweite Menge kann eine oder mehrere weitere Formmassen umfassen. Bevorzugt sind die erste Polymermasse und/oder die mindestens eine weitere Polymermasse thermoplastische Formmassen. Mehr bevorzugt enthalten die erste Polymermasse und/oder die mindestens eine weitere Polymermasse ein Polymer ausgewählt aus der Gruppe bestehend aus Polypropylen (PP), Polyethylen (PE), Polyoxymethylen (POM), Polyethylenterephthalat (PET), Polybutylenterephthalat (PBT), Polyamid (PA), Polycarbonat (PC), Polyarylethersulfonen (PSU, PESU, PPSU), thermoplastischen Polyurethanen (TPU), Polybutylenadipatterephthalat (PBAT), Polybutylensuccinat (PBS), Polylactid (PLA), Poly butylen sebacat terephthalat (PBSeT), Polylacticacid (PLA), Polyethylene naphtalate (PEN), Polyacrylmethacrylat (PMMA), Polystyrol (PS), Styrol enthaltenden Polymeren wie Acrylnitril-Butadien-Styrol-Copolymer (ABS) oder Mischungen davon. Die mindestens eine weitere Formmasse und gegebenenfalls die erste Formmasse können gefüllte oder verstärkte Formmassen sein. Insbesondere können die mindestens eine weitere Formmasse und gegebenenfalls die erste Formmasse mindestens einen Füllstoff wie Talkum, Glaskugeln oder Fasern wie Glasfasern oder Kohlenstofffasern enthalten.

Mehr bevorzugt ist ein in der ersten Polymermasse enthaltenes Polymer auch in der mindestens einen weiteren Polymermasse enthalten. Weiter bevorzugt umfasst die erste Polymermasse und/oder die mindestens eine weitere Polymermasse PBT, mehr bevorzugt umfassen die erste Polymermasse und die mindestens eine weitere Polymermasse PBT.

Das erste Färbemittel und/oder das mindestens eine weitere Färbemittel können in der ersten Formmasse und/oder in der mindestens einen weiteren Formmasse während des Verfahrens löslich oder unlöslich sein. Bevorzugt sind das erste Färbemittel und/oder das mindestens eine weitere Färbemittel Farbpigmente. Bevorzugt ist das erste Färbemittel ein schwarzes Färbemittel. Das erste Färbemittel umfasst bevorzugt Ruß wie Carbon Black oder eine Diaminophenazin-Verbindung wie Nigrosin. Mehr bevorzugt besteht das erste Färbemittel aus Ruß wie Carbon Black oder mindestens einer Diaminophenazin-Verbindung wie Nigrosin. Das mindestens eine weitere Färbemittel ist bevorzugt ein blaues Färbemittel, grünes Färbemittel, gelbes Färbemittel, rotes Färbemittel, beiges Färbemittel, oranges Färbemittel, weißes Färbemittel, graues Färbemittel, braunes Färbemittel oder goldenes Färbemittel.

Die Viskosität der ersten Formmasse und/oder der mindestens einen weiteren Formmasse, jeweils in plastifizierter Form liegt bevorzugt in einem Bereich von 50 Pa·s bis 1000 Pa·s.

Die Einspritzgeschwindigkeit der plastifizierten Formmassen von der Düse in das Spritzgusswerkzeug beträgt bevorzugt mehr als 25 $cm^3/s$, mehr bevorzugt von 50 $cm^3/s$ bis 100 $cm^3/s$, insbesondere von 60 $cm^3/s$ bis 80 $cm^3/s$, zum Beispiel 70 $cm^3/s$. Der Staudruck, der üblicherweise den Druck in dem Freiraum in dem Hohlzylinder bezeichnet, beträgt bevorzugt 1 bar bis 100 bar, mehr bevorzugt 10 bar bis 70 bar und weiterbevorzugt 20 bar bis 50 bar.

Eine Düsentemperatur beträgt bevorzugt von 150°C bis 450°C, mehr bevorzugt von 180°C bis 400°C. Die erste Formmasse und die mindestens eine weitere Formmasse weisen bevorzugt an der Schneckenspitze eine Temperatur im Bereich von 150°C bis 450°C, mehr bevorzugt von 180°C bis 400°C auf. Der Spritzdruck beträgt bevorzugt 400 bar bis 1000 bar.

Bevorzugt weist der Düsenkopf 2 bis 8, weiter bevorzugt 3 bis 8, mehr bevorzugt 3 bis 6, zum Beispiel 3, 4 oder 6 Kanäle, die auch als Löcher, Durchgänge oder Bohrungen bezeichnet werden können, auf. Bevorzugt weisen Mittelpunkte der radialen Querschnittsflächen der Kanäle gleiche Abstände zueinander auf. Die Form, die Anzahl und die Anordnung der Kanäle nehmen Einfluss auf die Geometrie des erzeugten Marmorierungsmusters. Bevorzugt sind die mindestens zwei Kanäle mit dem ersten Ende jeden Kanals mit einer Durchgangsbohrung im Düsenkörper verbunden und die Durchgangsbohrung im Düsenkörper ist mit dem Innenraum des Hohlzylinders verbunden. "Verbunden sein" ist in diesem Zusammenhang als fluidisch verbunden sein zu verstehen, das auch als Kommunizieren bezeichnet werden kann.

Bevorzugt sind die Kanäle zwischen ihrem ersten Ende und ihrem zweiten Ende voneinander getrennt. Insbesondere münden die mindestens zwei Kanäle jeweils separat mit ihrem ersten Ende in eine vordere Endfläche des Düsenkopfes und mit ihrem zweiten Ende in eine hintere Endfläche des Düsenkopfes. Insbesondere weisen die mindestens zwei Kanäle zwischen ihrem ersten Ende und ihrem zweiten Ende keine Durchgänge und/oder Durchlässe zueinander auf. Entsprechend findet bevorzugt in dem Düsenkopf kein Austausch von plastifizierter Formmasse zwischen den Kanälen statt, sondern die plastifizierte Formmasse, die die erste Formmasse und die mindestens eine weitere Formmasse umfasst, wird separat durch die einzelnen Kanäle gedrückt. Entsprechend findet bevorzugt durch die Kanäle keine zusätzliche Durchmischung statt. Die zwei getrennten Kanäle wirken also einer homogenen Durchmischung der ersten Formmasse mit der weiteren Formmasse entgegen, so dass die Reproduzierbarkeit unterstützt wird.

Die mindestens zwei Kanäle können gerade, zumindest gemäß dem erfindungsgemäßen Verfahren, und/ oder auf einer gekrümmten Bahn durch den Düsenkopf verlaufen beziehungsweise jeweils, insbesondere mindestens teilweise, eine Spirale bilden. In der erfindungsgemäßen Vorrichtung zur Herstellung von marmorierten Formteilen verlaufen die mindestens zwei Kanäle gekrümmt durch den Düsenkopf. Bevorzugt verlaufen die mindestens zwei Kanäle gemäß dem erfindungsgemäßen Verfahren gekrümmt durch den Düsenkopf. Die mindestens zwei Kanäle verlaufen weiter bevorzugt zumindest teilweise gekrümmt, also lediglich teilweise oder vollständig gekrümmt, durch den Düsenkopf.

Wenn die mindestens zwei Kanäle gerade durch den Düsenkopf verlaufen, können die Kanäle auch als gerade Bohrungen bezeichnet werden. Dabei verlaufen die Kanäle bevorzugt parallel zu einer Längsachse des Düsenkopfes und bevorzugt parallel zu einer Längsachse des Hohlzylinders. Ein Verlauf der mindestens zwei geraden Kanäle, wobei diese im Verhältnis zu der Längsachse des Düsenkopfes geneigt verlaufen, ist auch möglich. Durch die Neigung wird ein leichter Drall auf die plastifizierten Formmassen aufgeprägt.

Die Kanäle können ferner unterschiedliche Querschnittsgeometrien und/oder unterschiedliche Querschnittsgrößen aufweisen.

In einer bevorzugten Ausführungsform bilden die mindestens zwei Kanäle jeweils mindestens teilweise eine Spirale. Unter einer Spirale wird im Rahmen der Erfindung eine dreidimensionale Spirale verstanden, die auch als Schraubenlinie bezeichnet werden kann. Durch die mittels der mindestens zwei Kanäle jeweils gebildete Spirale wird ein Drall auf die plastifizierte Formmasse aufgeprägt, der sich in dem Marmorierungsmuster des hergestellten Formteils widerspiegelt. Insbesondere weisen die mindestens zwei Kanäle jeweils eine Mittelachse auf, wobei die Mittelachse des jeweiligen Kanals in Form der Spirale um die Längsachse des Düsenkopfes angeordnet ist. Weiter bevorzugt sind die Mittelachsen der mindestens zwei Kanäle an jeder Position mit gleichem Abstand zueinander und weiter bevorzugt auch mit gleichem Abstand von der Längsachse des Düsenkopfes angeordnet. Alternativ kann der Abstand der Mittelachsen der mindestens zwei Kanäle zueinander auch variieren und in der Förderrichtung zunehmen oder abnehmen. Die Mittelachse verläuft jeweils durch die Flächenschwerpunkte der Querschnittsflächen des jeweiligen Kanals. Die Spirale kann in Förderrichtung rechtsdrehend oder linksdrehend ausgeführt sein.

Bevorzugt weisen die Spiralen, die jeweils von einem der mindestens zwei Kanäle gebildet werden, die gleiche Geometrie, wie Steigung und Anzahl an Windungen, auf, und sind zueinander um einen radialen Winkel bezüglich der Längsachse des Düsenkopfes versetzt angeordnet. Als Steigung wird insbesondere der Steigungswinkel angegeben, der zum Beispiel bei konstanter Steigung und konstantem Durchmesser wie folgt definiert ist:

$$\alpha = arctan\left(\frac{S}{\pi \cdot D}\right),$$

mit $\alpha$: Steigungswinkel, S: Weg in Richtung der Längsachse des Düsenkopfes, der bei einer vollständigen Windung zurückgelegt wird und auch als Ganghöhe bezeichnet werden kann, und D: Durchmesser der Spirale.

Bevorzugt weist die Spirale an mindestens einer Position eine Steigung von weniger als 70° auf.

Die Spirale, die jeweils von einem der mindestens zwei Kanäle gebildet wird, kann eine konstante Steigung besitzen. Die konstante Steigung liegt bevorzugt in einem Bereich von 5° bis weniger als 60°, weiter bevorzugt von 10° bis 40° und insbesondere bevorzugt von 15° bis 30°. Zum Beispiel beträgt die konstante Steigung 20°.

Bevorzugt weist die Spirale an mindestens zwei unterschiedlichen Positionen jeweils unterschiedliche Steigungen auf. Die mindestens zwei unterschiedlichen Positionen auf der Spirale haben bevorzugt einen unterschiedlichen Abstand von der Austrittsöffnung der Düse. Bevorzugt unterscheidet sich eine erste Steigung der Spirale an einer ersten Position von einer zweiten Steigung der Spirale an einer zweiten Position um mindestens 20°, bevorzugt beträgt eine Differenz, insbesondere eine maximale Differenz, von der ersten Steigung und der zweiten Steigung mehr als 30° und weniger als 90°, zum Beispiel 60°.

Bevorzugt nimmt die Steigung der Spirale in Richtung der Austrittsöffnung der Düse ab. So kann sich die Steigung der Spirale beispielsweise in Förderrichtung der plastifizierten Formmasse von einer ersten Position zum Beispiel an einer zweiten Endfläche, in relativer Nähe zum Hohlzylinder, von größer als 70° zu einer zweiten Position an einer ersten Endfläche, nahe der der Austrittsöffnung der Düse, von weniger als 30° verändern. Die Änderung, insbesondere die kontinuierliche Änderung, von einer steilen Steigung zu einer flachen Steigung in Förderrichtung der plastifizierten Formmasse ermöglicht einen strömungsgünstigen Einlauf und gleichzeitig die Aufbringung eines starken Dralls am Auslauf aus den mindestens zwei Kanälen.

Bevorzugt weist die Spirale eine Anzahl von Windungen, die auch als Umdrehungen bezeichnet werden können, auf und weiter bevorzugt liegt die Anzahl der Windungen in einem Bereich von mehr als 0,25 bis 5. Entsprechend legt die Spirale bevorzugt einen Drehwinkel von mehr als 90° bis 1800° zurück. Weiter bevorzugt liegt die Anzahl der Windungen in einem Bereich von mehr als 0,25 bis 3, insbesondere in einem Bereich von mehr als 0,50 bis 3, zum Beispiel in einem Bereich von 0,51 bis 2.

Wenn die mindestens zwei, bevorzugt mindestens drei, mehr bevorzugt genau drei Kanäle spiralförmig ausgeführt sind, ist das erste Ende jeweils eines Kanals in einer weiteren Ausführungsform bevorzugt radial um einen Winkel von 45° bis 180°, mehr bevorzugt von 90° bis 180° und besonders bevorzugt von 110° bis 130°, zum Beispiel 120°, gegenüber dem zweiten Ende des Kanals versetzt. Die spiralförmig ausgeführten Kanäle können auch als gewundene Bohrungen bezeichnet werden.

Wenn die mindestens zwei Kanäle jeweils mindestens teilweise eine Spirale bilden, können die mindestens zwei Kanäle zum Beispiel jeweils als Schneckengang oder gewundene Bohrung, die auch als gekrümmte Bohrung bezeichnet werden kann, ausgeführt sein.

Sind die mindestens zwei Kanäle als Schneckengang ausgeführt, kann ein Teil des Düsenkopfes, der die mindestens zwei Kanäle voneinander trennt, mehrere Flügel bilden. Insbesondere ist die Anzahl an Flügeln gleich der Anzahl der mindestens zwei Kanäle, die in diesem Fall im Querschnitt durch einen Steg voneinander getrennt sind.

Die Ausführung der mindestens zwei Kanäle, bevorzugt mindestens drei, mehr bevorzugt genau drei Kanäle, jeweils als Schneckengang kann auch so beschrieben werden, dass in einer zylindrischen Bohrung, insbesondere einer zylindrischen Fließkanalbohrung, ein mehrflügeliger, bevorzugt dreiflügeliger Steg angeordnet ist, der entlang einer zentralen Längsachse der Düse in radialer Richtung gedreht wird. Weiter bevorzugt sind die mindestens zwei Kanäle durch zwei konzentrisch angeordnete Zylinder, die jeweils Teile der jeweiligen Mantelfläche darstellen, begrenzt. Insbesondere sind die mindestens zwei Kanäle durch dieselben zwei konzentrisch angeordneten Zylinder begrenzt.

Die mindestens zwei Kanäle können verschiedene Querschnittsgeometrien und/oder verschiedene Querschnittsgrößen aufweisen. Bevorzugt weisen die mindestens zwei Kanäle die gleiche Querschnittsgeometrie und die gleiche Querschnittsgröße auf.

Bevorzugt weisen die Kanäle in einem radialen Querschnitt des Düsenkopfes jeweils eine runde, ellipsoide, ringsegmentförmige oder mehreckige wie hexagonale oder dreieckige Querschnittsfläche auf, bevorzugt eine dreieckige Querschnittsfläche. Die dreieckige Querschnittsfläche kann mindestens eine gekrümmte Seitenlinie aufweisen. Eine dreieckige Querschnittsfläche mit mindestens einer gekrümmten Seitenlinie liegt beispielsweise bei der Ausführung der mindestens zwei Kanäle, bevorzugt mindestens drei, mehr bevorzugt genau drei Kanäle, als jeweils ein Schneckengang vor. Das Ringsegment deckt bevorzugt einen Winkel in einem Bereich von 100° bis 180° ab. Insbesondere wenn die Anzahl der mindestens zwei Kanäle mindestens vier beträgt kann der Winkel des Ringsegments kleiner als 100° sein. Weisen die Kanäle einen dreieckigen Querschnitt auf und sind Zwischenwände zwischen den mindestens zwei Kanälen als Schneckengang ausgeführt, so kann dies auch so beschrieben werden, dass der Heißkanal eine zylinderförmige zentrale Schmelzekanalbohrung aufweist, in dem eine Spindel, die den Flügeln entspricht, angeordnet ist, die die mindestens zwei Kanäle voneinander trennt. Sind die mindestens zwei Kanäle jeweils als gewundene Bohrung ausgeführt, weisen die mindestens zwei Kanäle bevorzugt jeweils eine runde, ellipsoide oder mehreckige wie hexagonale Querschnittsfläche auf.

Die Querschnittsfläche des Abschnitts des Düsenkopfes, in dem die mindestens zwei Kanäle angeordnet sind, weist bevorzugt ein Öffnungsverhältnis auf, das das Verhältnis von durchströmbarer Fläche zur Gesamtfläche darstellt und 40% bis 80%, weiter bevorzugt 50% bis 75% beträgt. Die Berechnung des Öffnungsverhältnisses basiert bevorzugt auf einer, insbesondere runden, Querschnittsfläche, deren Radius dem maximalen Abstand einer Wand der mindestens zwei Kanäle von der Längsachse des Düsenkopfes entspricht. Das Öffnungsverhältnis kann zum Beispiel 68% betragen im Fall von zwei Kanälen, die jeweils eine Spirale in Form eines Schneckengangs mit variabler Steigung von 90° bis 30° bilden und 51% im Fall von drei Kanälen, die jeweils eine Spirale in Form eines Schneckengangs mit variabler Steigung von 90° bis 30° bilden. Bevorzugt sind die durchströmbaren Flächen in der ersten Endfläche und in der zweiten Endfläche in die mindestens zwei Kanäle beziehungsweise aus den mindestens zwei Kanälen im Wesentlichen gleich groß. Entsprechend weichen die Eintrittsflächen und die Austrittsflächen der mindestens zwei Kanäle bevorzugt um weniger als 30%, mehr bevorzugt um weniger als 10% und insbesondere bevorzugt um weniger als 5% voneinander ab, jeweils bezogen auf die Eintrittsfläche. Dies betrifft die einzelnen der mindestens zwei Kanäle sowie die Summe der Eintrittsflächen beziehungsweise Austrittsflächen der mindestens zwei Kanäle.

Der Düsenkopf kann einstückig oder mehrstückig ausgeführt sein. Einstückig ausgeführt wird insbesondere dahingehend verstanden, dass das eine einstückig ausgeführte Bauteil aus einem kontinuierlichen Material hergestellt ist und insbesondere keine Verbindungen, zum Beispiel Schweißnähte und/oder Lötnähte, aufweist. So können zum Beispiel die Wände der mindestens zwei Kanäle, insbesondere, wenn diese als Flügel ausgeführt sind, an eine hohlzylindrische Grundform des Einsatzes oder an einen zentral angeordneten vollzylindrischen Teil des Einsatzes angeformt sein. Unter einem kontinuierlichen Material wird ein Material verstanden, das über das gesamte einstückig ausgeführte Bauteil eine homogene Zusammensetzung aufweist. Das eine einstückig ausgeführte Bauteil ist insbesondere nicht aus mehreren Schichten oder mehreren Bauteilen zusammengesetzt und/oder weist keine Beschichtungen aus einem weiteren Material auf.

Bevorzugt umfasst der Düsenkopf einen Einsatz, der bevorzugt zylinderförmig ist, wobei die mindestens zwei Kanäle weiter bevorzugt in dem Einsatz angeordnet sind. Entsprechend kann ein Düsenkopf mit wechselnden Einsätzen, die unterschiedlich verlaufende Kanäle aufweisen, eingesetzt werden, was eine hohe Flexibilität bei der Gestaltung der Marmorierungsmuster auf einer Maschine ermöglicht. Die verschiedenen Einsätze können je nach Bedarf in dem Düsenkopf ausgetauscht werden. Der Einsatz ist bevorzugt passgenau mit einer bevorzugt zentralen zylinderförmigen Bohrung in dem Düsenkopf ausgeführt. Durch Verwendung des Einsatzes können unterschiedliche Marmorierungsmuster in schneller Abfolge auf der gleichen Schneckenspritzgussmaschine hergestellt werden.

Der Einsatz ist weiter bevorzugt einstückig ausgeführt. Insbesondere sind Mantelflächen, bevorzugt alle Mantelflächen, der mindestens zwei Kanäle, die bevorzugt vollständig geschlossen sind, von dem einen einstückig ausgeführten Einsatz begrenzt. Die erste Endfläche und die zweite Endfläche sind im Querschnitt der mindestens zwei Kanäle frei von Material des Einsatzes, so dass die plastifizierte Formmasse durch die erste Endfläche und die zweite Endfläche hindurchtreten kann.

Weiterhin wird ein Verfahren zur Herstellung der erfindungsgemäßen Vorrichtung vorgeschlagen, wobei zumindest der Düsenkopf oder zumindest der Einsatz mit einem additiven Verfahren, insbesondere mittels 3D-Druck, hergestellt wird. Die Herstellung der mindestens zwei Kanäle mit einem additiven Verfahren ermöglicht, dass Kanäle mit komplexeren, insbesondere gekrümmten spiralförmigen, Verläufen, zum Beispiel als Schneckengang, erzeugt werden können. Ferner führt diese Herstellung ähnlich wie bei Gussbauteilen zu einer Oberflächenrauhigkeit, die einen positiven Effekt auf die Marmorierungsmuster hat. Bevorzugt werden mit dem additiven Verfahren Schichten mit einer Schichthöhe von jeweils 0,08 mm bis 0,2 mm, zum Beispiel 0,1 mm, erzeugt.

Ferner ist es durch die Herstellung der erfindungsgemäßen Vorrichtung, zumindest des Düsenkopfes oder zumindest des Einsatzes, mittels des additiven Verfahrens möglich, einen Hinterschnitt zu erzeugen, um eine größere durchströmbare Fläche der mindestens zwei Kanäle zu erzielen. Unter dem Hinterschnitt wird im Rahmen der Erfindung verstanden, dass ein Durchmesser eines Einsatzschmelzekanals in Förderrichtung zunimmt. Insbesondere kann ein zentral angeordneter Einsatzschmelzekanal, der an der zweiten Endfläche angeordnet ist, einen Durchmesser aufweisen, der in Förderrichtung zunimmt.

Durch das additive Verfahren ist es weiterhin möglich Kanäle herzustellen, wobei die mindestens zwei Kanäle einen Hinterschnitt und insbesondere jeweils mehr als 0,5 Windungen aufweisen. Unter einem Hinterschnitt ist bezüglich der mindestens zwei Kanäle insbesondere zu verstehen, dass die Querschnittsflächen eines Kanals an der ersten Endfläche und an der zweiten Endfläche in axialer Projektion keine Überschneidung haben.

Als additive Verfahren können Laserschweißverfahren oder Schmelzschichtungsverfahren wie Fused Deposition Modeling (FDM) oder Fused Filament Fabrication (FFF) eingesetzt werden. Zur Herstellung der Düse oder Teilen der Düse, insbesondere zumindest des Düsenkopfes oder zumindest des Einsatzes, kann insbesondere ein Metal Injection Molding Feedstock (MIM Feedstock), zum Beispiel Catamold®, als Material eingesetzt werden. MIM Feedstock Materialien enthalten verschiedene Stahltypen wie zum Beispiel Edelstäle oder Werkzeugstähle, so dass das hergestellte einstückige Bauteil, insbesondere der Einsatz, gezielt an den Verwendungszweck angepasst werden kann.

Bevorzugt wird die Düse, der Düsenkopf und/oder mindestens der Einsatz aus einem Metall enthaltenden Pulver hergestellt. Weiter bevorzugt wird die Düse, der Düsenkopf und/oder mindestens der Einsatz aus einer Zusammensetzung hergestellt, die, bezogen auf die Zusammensetzung, 30 Vol-% bis 70 Vol-%, mehr bevorzugt 40 Vol-% bis 60 Vol-%, mindestens eines anorganischen Pulvers und 30 Vol-% bis 70 Vol-%, mehr bevorzugt 40 Vol-% bis 60 Vol-%, mindestens eines Bindemittel enthält. Die Partikelgröße des mindestens einen anorganischen Pulvers beträgt bevorzugt von 0,5 $\mu$m bis 50 $\mu$m, mehr bevorzugt von 0,1 $\mu$m bis 30 $\mu$m. Ferner umfasst das mindestens eine anorganische Pulver bevorzugt ein Metall, eine Metalllegierung, eine Vorläuferverbindung eines keramischen Materials oder Mischungen daraus. Mehr bevorzugt besteht das mindestens eine anorganische Pulver aus einem Metall, einer Metalllegierung, einer Vorläuferverbindung eines keramischen Materials oder Mischungen daraus. Bevorzugt umfasst das mindestens eine Bindemittel eine Polymerzusammensetzung, insbesondere POM. Weiter bevorzugt besteht das mindestens eine Bindemittel aus POM. Die Zusammensetzung kann als Granulat oder Filament eingesetzt werden.

Die Düse kann als Nadelverschlussdüse oder offene Düse ausgeführt sein. Eine offene Düse umfasst den Düsenkopf und den Düsenkörper, die eine einzige gerade zentrale Bohrung besitzen. Der Düsenkörper einer Nadelverschlussdüse umfasst eine Aufnahmevorrichtung für eine Verschlussnadel, die bevorzugt über zwei Stege mit dem Düsenkörper verbunden ist.

Neben dem Einsatz kann der Düsenkopf eine, zwei oder mehrere Scheiben aufweisen, die zur Positionierung und Fixierung des Einsatzes im Düsenkopf dienen können. Besonders bevorzugt ist der Einsatz zwischen zwei Scheiben angeordnet. Die Scheiben weisen bevorzugt eine zentrale Bohrung auf.

Zur Durchführung des erfindungsgemäßen Verfahrens zur Herstellung von reproduzierbar marmorierten Formteilen ist jegliche Art von Düse einsetzbar. In Abhängigkeit der Gestaltung der Düse werden unterschiedliche Marmorierungsmuster auf den Formteilen erzeugt.

So führt bereits die Verwendung einer Nadelverschlussdüse zu einem stark ausgeprägten Marmorierungsmuster. Die konkrete Form des Marmorierungsmusters wird durch die Geometrie der Halterung der Nadelverschlussdüse beeinflusst, ebenso durch die Gestaltung der Schneckenspitze. Durch unterschiedliche geometrische Gestaltung der Einbauten der Schneckenspritzgussmaschine werden unterschiedliche Fließnähte in der plastifizierten Formmasse erzeugt, die das Marmorierungsmuster maßgeblich bestimmen.

Der Düsenkopf mit mindestens zwei Kanälen kann in Kombination mit einer offenen Düse eingesetzt werden. Düsenkopfe mit einer zentralen Bohrung können in Kombination mit einer Nadelverschlussdüse eingesetzt werden.

Insbesondere weist die Düse einen kleineren äußeren Durchmesser als der Hohlzylinder auf. Die Düse ist insbesondere lösbar mittels einer Schraubverbindung mit dem Hohlzylinder verbunden. Ferner ist zumindest an einer Stelle eine innere freie Querschnittsfläche der Düse kleiner als eine innere freie Querschnittsfläche des Hohlzylinders. Der Hohlzylinder hat in Abhängigkeit des herzustellenden Produktes unterschiedliche innere Durchmesser. Der innere Durchmesser liegt zum Beispiel in einem Bereich von 10 mm bis 150 mm oder von 25 mm bis 50 mm wie 25 mm oder 30 mm. Die Austrittsöffnung weist zum Beispiel einen Durchgang mit einem Durchmesser von 1,5 bis 10 mm, oder von 3 bis 6 mm wie 5 mm, auf.

Bei Verwendung einer offenen Düse ohne die mindestens zwei Kanäle ist eine kreisförmige gleichmäßige Farbverteilung sichtbar. Der optische Effekt, der vom Einsatz ausschließlich einer offenen Düse erzeugt wird, kann als konzentrische Kreise beschrieben werden. Werden mindestens zwei wie 3, 4 oder 6 Kanäle verwendet, so wird die kreisförmige Struktur durchbrochen und leichte Verwirbelungen der ersten Formmasse in der mindestens einen weiteren Formmasse sind sichtbar. Eine Anzahl von Streifen, die der Anzahl von Kanälen entspricht, welche Fließnähte erzeugen, ist erkennbar.

Durch Ausführung der mindestens zwei Kanäle als Spiralen mit runder oder ellipsoider radialer Querschnittsfläche werden Verwirbelungen der ersten Formmasse in der mindestens einen weiteren Formmasse verstärkt. Sind die mindestens zwei Kanäle jeweils als Schneckengang ausgeführt, so bilden sich streifenförmige Wellen als Marmorierungsmuster mit einer sehr guten Reproduzierbarkeit.

Werden dem Hohlzylinder neben der ersten Formmasse mindestens zwei weitere Formmassen zugeführt, kann jede weitere Formmasse jeweils eine weitere Polymermasse und gegebenenfalls mindestens ein weiteres Färbemittel enthalten. Die weiteren Formmassen können zusammen mit oder zeitlich vor oder nach, gegebenenfalls direkt vor oder direkt nach der mindestens einen weiteren Formmasse dem Hohlzylinder zugegeben werden. Die mindestens zwei weiteren Formmasse können auch kontinuierlich zugeführt werden.

Kurze Beschreibung der Zeichnungen

Ausführungsbeispiele der Erfindung sind in den Zeichnungen dargestellt und werden in der nachfolgenden Beschreibung näher erläutert. Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen. Es zeigen:

Figur 1          eine erste schematische Darstellung einer Schneckenspritzgussmaschine,

Figur 2          eine zweite schematische Darstellung einer Schneckenspritzgussmaschine,

Figur 3          einen Ausschnitt einer Schneckenspritzgussmaschine,

Figur 4          einen Düsenkopf,

Figur 5          einen Ausschnitt eines Düsenkopfes,

Figur 6          einen radialen Querschnitt des Ausschnitts des Düsenkopfs,

Figur 7          eine weitere radiale Schnittansicht des Ausschnitts des Düsenkopfes,

Figur 8                    eine weitere Ausführungsform eines Düsenkopfs,

Figur 9                    einen radialen Querschnitt eines Ausschnitts der weiteren Ausführungsform des Düsenkopfs,

Figur 10                   einen Ausschnitt einer weiteren Ausführungsform eines Düsenkopfs,

Figur 11                   einen radialen Querschnitt des Ausschnitts der weiteren Ausführungsform des Düsenkopfs,

Figuren 12 bis 21          jeweils eine Draufsicht beziehungsweise eine perspektivische Ansicht verschiedener Ausführungsformen der mindestens zwei Kanäle,

Figuren 22 bis 27          jeweils eine Draufsicht, eine perspektivische Ansicht beziehungsweise einen Längsschnitt zweier
                           weiterer Ausführungsformen der mindestens zwei Kanäle und

Figur 28                   einen Einsatz mit Hinterschnitt.

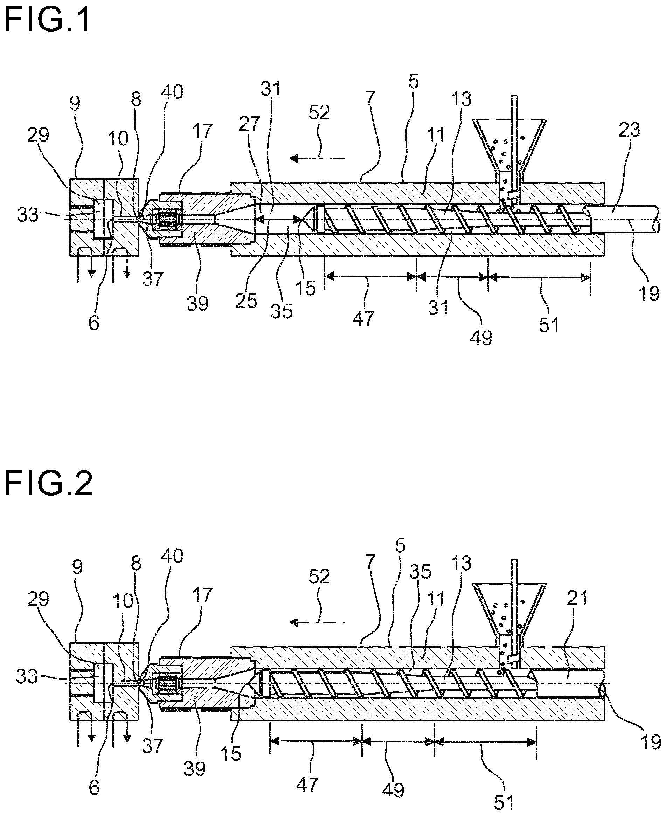

Figur 1 zeigt eine schematische Darstellung einer Schneckenspritzgussmaschine 7, die eine Einspritzeinheit 5 umfasst. Die Einspritzeinheit 5 umfasst einen Hohlzylinder 11, eine Schnecke 13 mit einer Schneckenspitze 15 und eine Düse 17 mit einem Düsenkopf 37 und einem Düsenkörper 39. Die Schnecke 13 ist rotierbar und in Richtung einer Längsachse 19 des Hohlzylinders 11 gelagert. Die Schnecke 13 befindet sich in einer hinteren Stellung 23 im Hohlzylinder 11, wobei sich ein Abstand 25 zwischen der Düse 17 und der Schneckenspitze 15 erstreckt, so dass ein Freiraum 27 zwischen der Düse und der Schneckenspitze 15 in dem Hohlzylinder 11 vorliegt.
An die Düse 17, die den Düsenkopf 37, den Düsenkörper 39 und eine Austrittsöffnung 40 aufweist, schließt sich ein Spritzgusswerkzeug 9 mit einer Kavität 29 an, die ein inneres Volumen 33 besitzt. Ferner besitzt das Spritzgusswerkzeug 9 eine Eintrittsöffnung 8 in das Spritzgusswerkzeug 9 und einen Einlass 6 in die Kavität 29.
Die Schnecke 13 weist eine Meteringzone 47, eine Kompressionszone 49 und eine Einzugszone 51 auf. Der Hohlzylinder 11 besitzt eine Längsachse 19. Mit der Schnecke 13 können Formmassen in einer Förderrichtung 52 in den Freiraum 27 gefördert werden. Der Freiraum 27 ist Teil des Innenraums 35 des Hohlzylinders 11, der von dem Hohlzylinder 11 und der Schnecke 13 begrenzt wird.
Figur 2 zeigt eine zweite schematische Darstellung einer Schneckenspritzgussmaschine 7 mit einem Spritzgusswerkzeug 9, die im Wesentlichen der Darstellung von Figur 1 entspricht. Jedoch befindet sich die Schnecke 13 gemäß Figur 2 in einer vorderen Stellung 21 in dem Hohlzylinder 11. Im Vergleich zu Figur 1 wurde der Abstand 25 durch ein Vorstoßen der Schnecke 13 verringert.

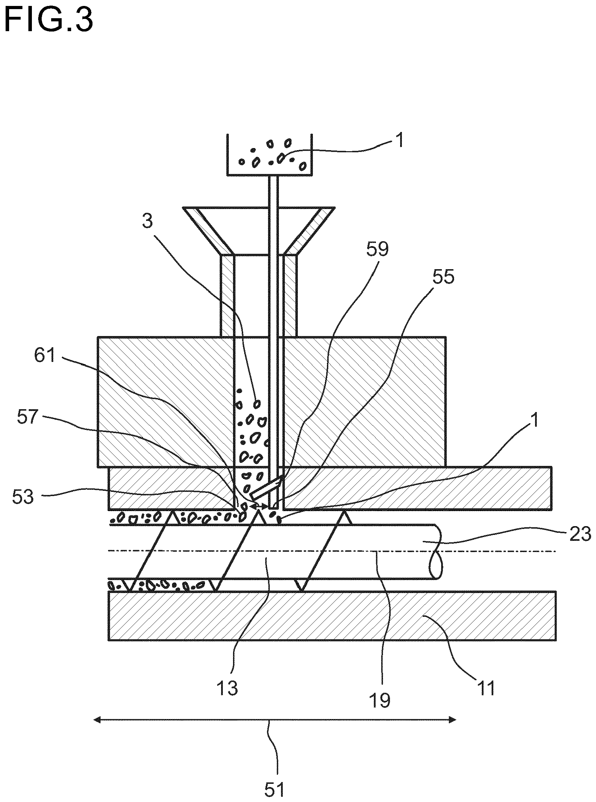

Figur 3 zeigt einen Ausschnitt einer Schneckenspritzgussmaschine 7. Ein Teil einer Einzugszone 51 einer Schnecke 13, die sich in einem Hohlzylinder 11 befindet, ist dargestellt. Der Hohlzylinder 11 besitzt eine Längsachse 19, entlang derer die Schnecke 13 beweglich ist. Die Schnecke 13 befindet sich in der Darstellung gemäß Figur 3 in einer hinteren Stellung 23. Ein Teil der Schnecke 13 befindet sich unterhalb einer Zufuhröffnung 53. In der dargestellten Ausführungsform werden eine erste Formmasse und eine weitere Formmasse 3 durch die Zufuhröffnung 53 der Schnecke 13 zugeführt. Die Zufuhröffnung 53 weist einen ersten Bereich 55 zur Zuführung der ersten Formmasse 1 und einen zweiten Bereich 57 zur Zuführung der weiteren Formmasse 3 auf. Durch eine Abdeckung 59 liegt ein zweiter Abstand 61 zwischen dem ersten Bereich 55 und dem zweiten Bereich 57 vor, wodurch die erste Formmasse 1 räumlich separat von der weiteren Formmasse 3 zugeführt wird.

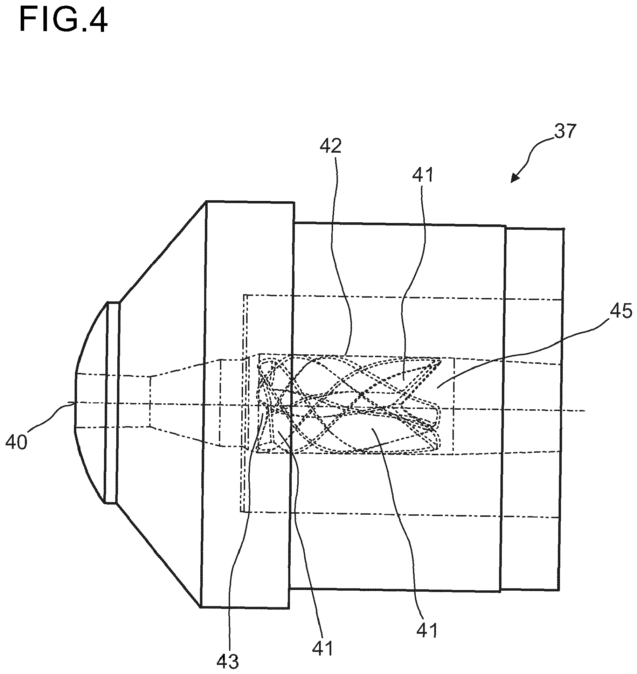

Figur 4 zeigt einen Düsenkopf 37 einer Düse 17 mit einer Austrittsöffnung 40. In dem Düsenkopf 37 ist ein Einsatz 42 angeordnet, der drei Kanäle 41 aufweist. Die Kanäle 41 sind als jeweils ein Schneckengang ausgeführt. Jeder Kanal 41 weist ein erstes Ende 43 und ein zweites Ende 45 auf. Das erste Ende 43 jedes Kanals 41 kommuniziert mit der Austrittsöffnung 40 und das zweite Ende 45 jeden Kanals 41 kommuniziert mit einem Innenraum 35 eines Hohlzylinders 11, der lösbar mit der Düse 17 verbunden ist. Der Hohlzylinder 11 ist in Figur 4 nicht dargestellt, er schließt sich auf der der Austrittsöffnung 40 abgewandten Seite der Düse 17 an die Düse 17 an.

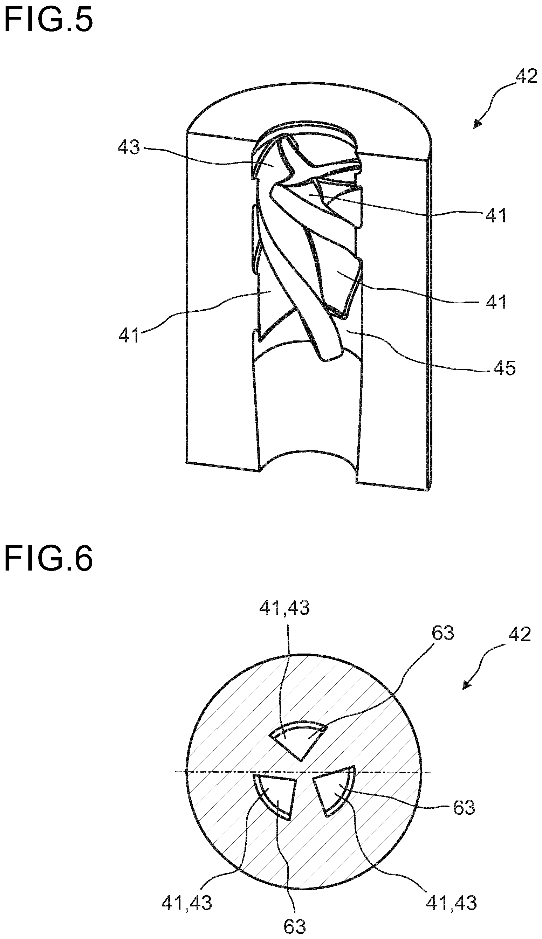

Figur 5 zeigt eine Halbschnittansicht des Einsatzes 42, der in dem Düsenkopf 37 gemäß Figur 4 angeordnet ist.
Figur 6 zeigt einen radialen Querschnitt des Ausschnitts des Düsenkopfs 37 gemäß der Figuren 4 und 5. Der Einsatz 42 weist drei Kanäle 41, deren erstes Ende 43 erkennbar ist, mit jeweils einer dreieckigen Querschnittsfläche 63 auf.

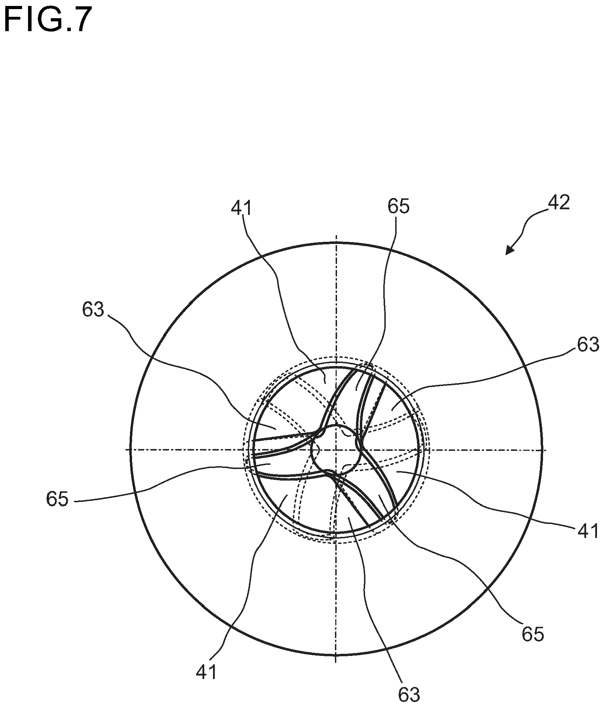

Figur 7 zeigt eine radiale Schnittansicht des Einsatzes 42 gemäß Figur 5. Die dreieckigen Querschnittsflächen 63 der Kanäle 41 sind mit durchgezogenen Linien in einer ersten Sichtebene erkennbar. Ebenso sind die Kanäle 41 mit ihren dreieckigen Querschnittsflächen 63 in einer weiteren Ebene durch gestrichelte Linien dargestellt, die unterhalb der ersten Sichtebene liegt, so dass der Verlauf der Kanäle 41 in dem Einsatz 42 erkennbar ist. Durch die Stege 65 sind die Kanäle 41 voneinander getrennt.

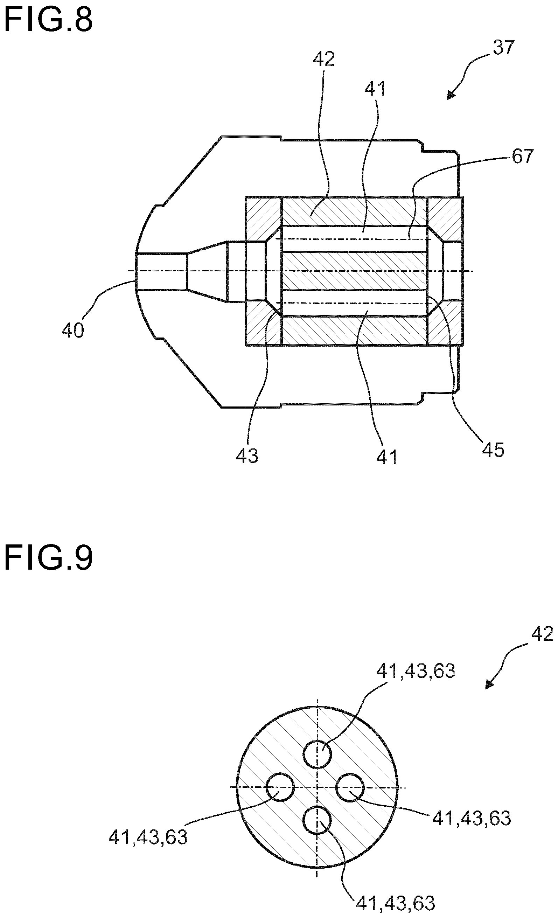

Figur 8 zeigt eine weitere Ausführungsform eines Düsenkopfs 37. In dem Düsenkopf 37 ist ein Einsatz 42 angeordnet, der vier gerade Bohrungen als Kanäle 41 besitzt.

Figur 9 zeigt einen radialen Querschnitt des Einsatzes 42 gemäß Figur 8. Die Kanäle 41 besitzen runde Querschnittsflächen 63.

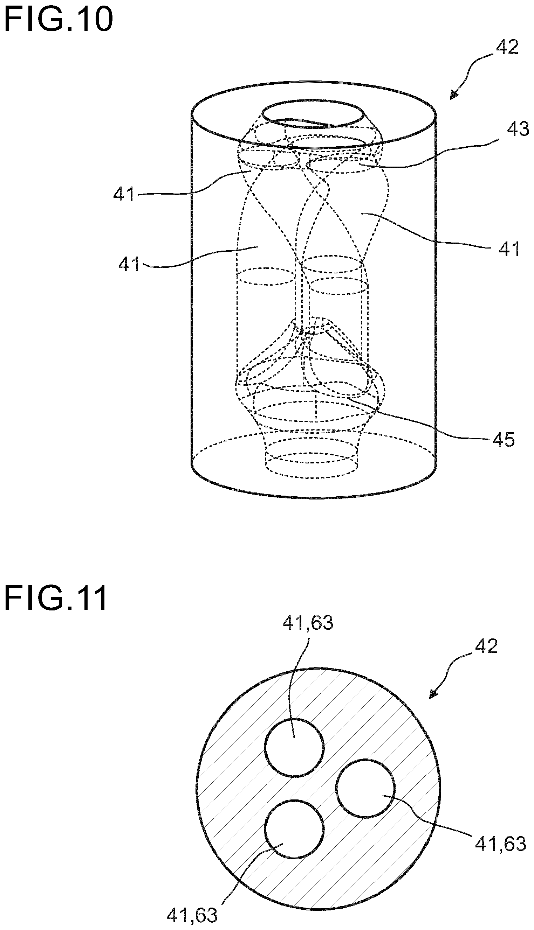

Figur 10 zeigt noch eine weitere Ausführungsform eines Düsenkopfs 37. In dem Ausschnitt ist noch ein weiterer Einsatz 42 dargestellt, der in dem Düsenkopf 37 angeordnet sein kann. Der Einsatz 42 weist drei Kanäle 41 auf. Die drei Kanäle 41 besitzen runde Querschnittsflächen 63 und sind jeweils spiralförmig gekrümmt. Ein erstes Ende 43 jeweils eines Kanals 41 ist radial um 120° gegenüber einem zweiten Ende 45 des Kanals 41 versetzt. Das erste Ende 43 jeden Kanals 41 kommuniziert mit einer Austrittsöffnung 40 einer Düse 17, in der der Einsatz 42 angeordnet, und das zweite Ende 45 jeden Kanals 41 kommuniziert mit einem Innenraum 35 eines Hohlzylinders 11, der lösbar mit der Düse 17 verbunden ist und der in Figur 10 nicht dargestellt ist.

Figur 11 zeigt einen radialen Querschnitt des Einsatzes 42 gemäß Figur 10. Die runden Querschnittsflächen 63 der drei Kanäle 41 sind sichtbar.

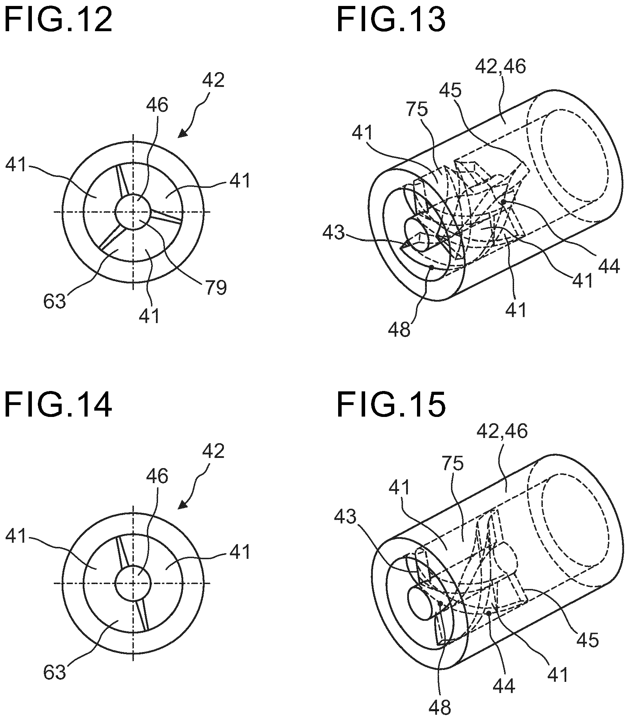

Die Figuren 12 bis 21 zeigen fünf weitere Ausführungsformen eines Einsatzes 42, die jeweils in einer Draufsicht beziehungsweise in perspektivischer Ansicht dargestellt sind. In den Figuren 12 bis 21 bilden die Kanäle 41 jeweils eine Spirale 75, wobei die Mittelachse 67 jeden Kanals 41 jeweils in Form der Spirale 75 angeordnet ist und eine bestimmte Anzahl an Windungen 50 aufweist.

Gemäß den Figuren 12 und 13 weist der Einsatz 42 drei Kanäle 41 auf, die durch einen Vollzylinder 79 voneinander abgetrennt sind. Die Steigung der Spiralen 75 nimmt in Förderrichtung 52, also von dem zweiten Ende 45 zu dem ersten Ende 43 jeden Kanals 41, ab. An einer ersten Position 44 liegt eine größere Steigung als an einer zweiten Position 48 vor. Die Steigung ändert sich von ca. 90° zu einer relativ flachen Steigung von ca. 30°. Dadurch ergeben sich ein strömungsgünstiger Einlauf sowie ein starker Drall, der an einem Auslauf, also am ersten Ende 43, jeden Kanals 41, auf die plastifizierte Formmasse aufgeprägt wird. Es liegt eine konstante freie Querschnittsfläche 63 und damit ein konstantes Öffnungsverhältnis vor. Die Spiralen 75 weisen jeweils eine halbe Windung 50 auf, so dass ein Steg 65 zwischen zwei Kanälen 41 um 180° im Vergleich vom ersten Ende 43 und zweiten Ende 45 gedreht wird.

Der Einsatz 42 gemäß Figuren 14 und 15 entspricht dem Einsatz 42 gemäß den Figuren 12 und 13 mit dem Unterschied, dass lediglich zwei Kanäle 41 vorliegen.

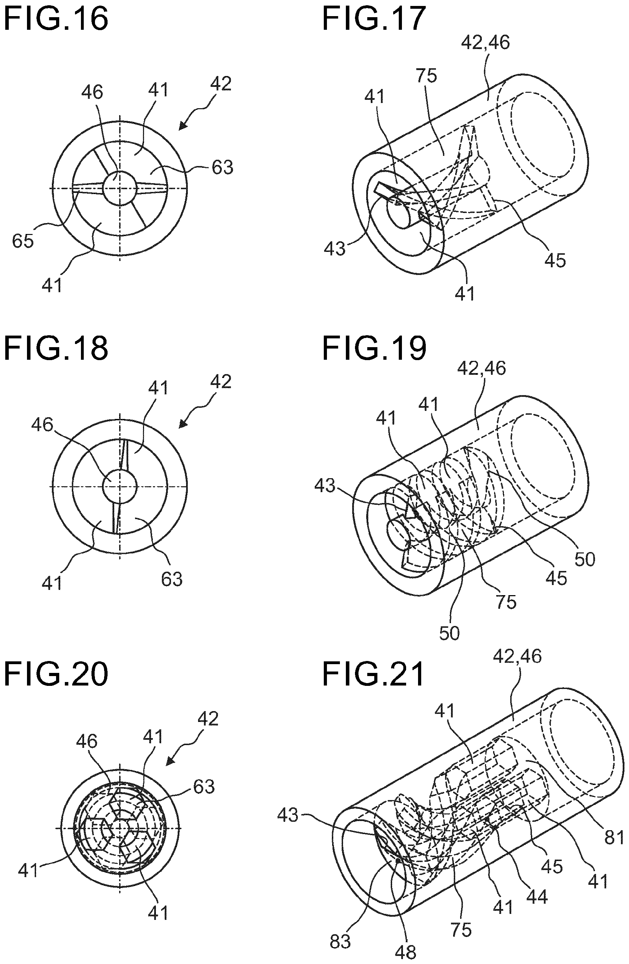

Der Einsatz 42 gemäß Figuren 16 und 17 entspricht im Wesentlichen dem Einsatz 42 gemäß den Figuren 14 und 15 mit dem Unterschied, dass die Spiralen 75 eine konstante Steigung aufweisen und lediglich jeweils nur ca. ein Drittel einer vollständigen Windung 50 aufweisen, so dass der Steg 65 um ca. 120° im Vergleich vom ersten Ende 43 zum zweiten Ende 45 gedreht wird. Die Steigung beträgt ca. 60°.

Der Einsatz 42 gemäß Figuren 18 und 19 entspricht im Wesentlichen dem Einsatz 42 gemäß den Figuren 16 und 17 mit dem Unterschied, dass die Spiralen 75 1,5 Windungen 50 aufweisen, so dass eine Steigung von ca. 20° vorliegt.

Der Einsatz 42 gemäß Figuren 20 und 21 ist ähnlich zu dem Einsatz 42 gemäß den Figuren 12 und 13. Es liegen drei Kanäle 41 in Form jeweils einer Spirale 75 vor, die in einer ersten Position 44 eine größere Steigung als in einer zweiten Position 48 aufweisen. Die Kanäle 41 des Einsatzes 42 gemäß den Figuren 20 und 21 bilden jeweils teilweise eine Spirale 75 und die ersten Enden 43 der Kanäle 41 münden in eine erste Endfläche 83. Ein weiterer Teil der Kanäle 41 verläuft gerade und mündet mit dem zweiten Ende 45 in eine zweite Endfläche 81. Ferner weisen die Kanäle 41 eine hexagonale Querschnittsfläche 63 auf.

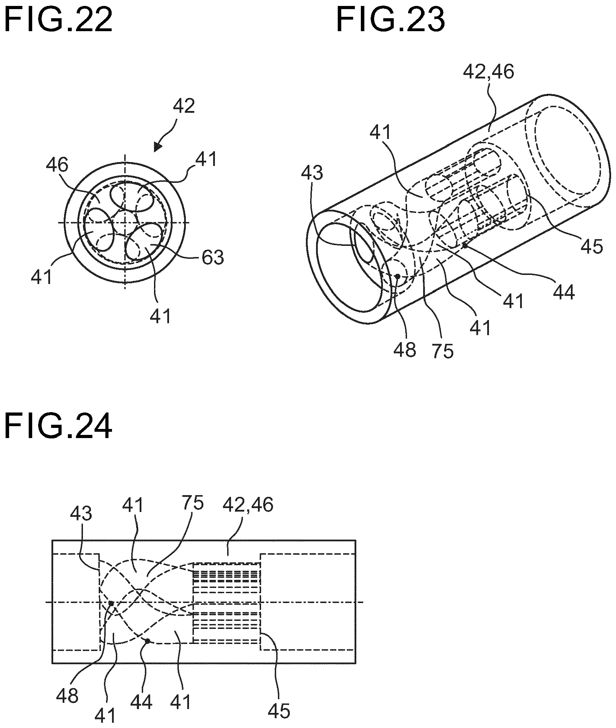

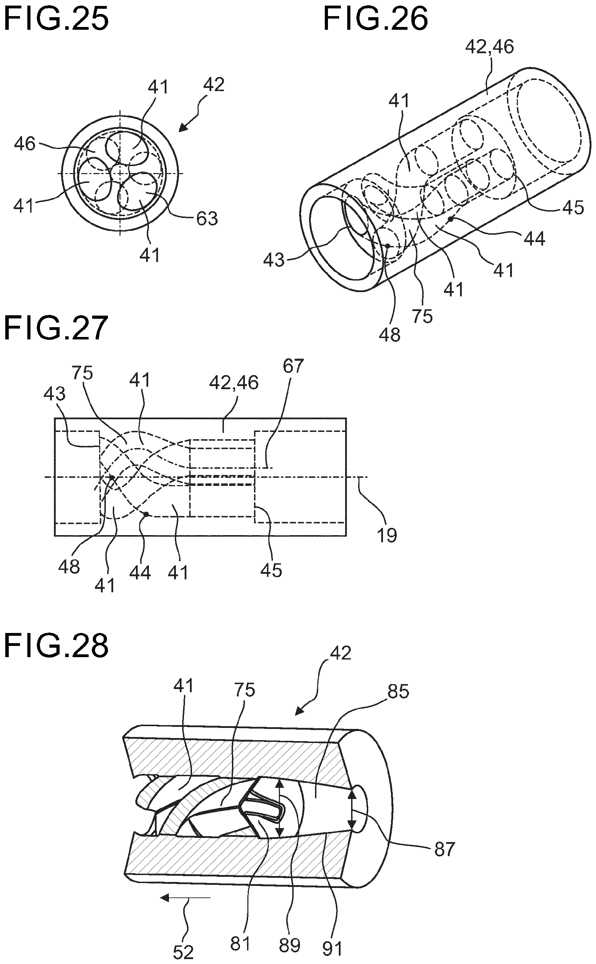

Der Einsatz 42, der in einer Draufsicht, in perspektivischer Ansicht und in einem Längsschnitt in den Figuren 22, 23 beziehungsweise 24 dargestellt ist, entspricht im Wesentlichen dem Einsatz 42 gemäß den Figuren 25, 26 und 27 mit dem Unterschied, dass die Kanäle 41 eine konstante ellipsoide Querschnittsfläche 63 aufweisen. Durch eine konstante Querschnittsfläche 63 als Ellipse wird ein höheres Öffnungsverhältnis in der Querschnittsfläche 63 im Vergleich zu einer teilweise runden Querschnittsfläche 63 erzielt.

Der Einsatz 42 gemäß den Figuren 25, 26 und 27 entspricht im Wesentlichen dem Einsatz 42 der Figuren 22, 23 und 24 mit dem Unterschied, dass die Kanäle 41 eine veränderliche Querschnittsfläche 63 aufweisen. An dem zweiten Ende 45 besitzen die Kanäle 41 eine runde Querschnittsfläche 63 und auch entlang des gerade verlaufenden Teils der Kanäle 41. In der Spirale 75 verändert sich die Querschnittsfläche 63 von einer runden Form zu einer abgeplatteten ellipsoiden Form, da eine Neigung der Mittelachsen 67 der Kanäle 41 im Verhältnis zur Längsachse 19 zunimmt.

Figur 28 zeigt einen Einsatz 42, der einen Hinterschnitt 91 aufweist. Der Einsatz 42 umfasst drei Kanäle 41, die jeweils eine Spirale 75 mit einer variablen Steigung bilden. In dem Einsatz 42 endet in Förderrichtung 52 ein Einsatzschmelzekanal 85 an einer zweiten Endfläche 81 der Kanäle 41. Der Einsatzschmelzekanal 85 weist den Hinterschnitt 91 auf, so dass ein erster Durchmesser 87 des Einsatzschmelzekanals 85 kleiner ist ein zweiter Durchmesser 89 des Einsatzschmelzekanals 85 an der zweiten Endfläche 81. Entsprechend nimmt der Durchmesser 87, 89 des Einsatzschmelzekanals 85 in der Förderrichtung 52 zu.

Beispiele

Beispiel 1 Herstellung von Schalen

Zur Herstellung von Kompottschalen auf einer hydraulischen Spritzgussmaschine mit 1000 kN Zuhaltekraft, umfassend einen Zylinder mit 30 mm Innendurchmesser, wurde pro Schale, also pro Schuss, jeweils eine erste Menge einer ersten Formmasse bereitgestellt. Die erste Formmasse bestand aus einem schwarzen Farbgranulat, das Carbon Black als schwarzes Färbemittel mit einer Konzentration von 25 Gew.-% in PBT enthielt. Die erste Menge wies eine Masse von 0,03 g auf.

Des Weiteren wurde für jede Schale eine zweite Menge einer weiteren Formmasse bereitgestellt. Die zweite Menge wies eine Masse von 55,32 g auf. Die weitere Formmasse umfasste pro zweiter Menge 55 g eines ungefärbten PBT-Granulats sowie 0,32 g eines eingefärbten PBT-Granulats, das ein weiteres Färbemittel in konzentrierter Form enthielt. Die weitere Formmasse lag als Granulatgemisch vor und das ungefärbte PBT-Granulat und das eingefärbte PBT-Granulat waren in der weiteren Formmasse vorgemischt.

Zehn Schalen wurden hintereinander hergestellt, so dass das Verfahren mehrmals wiederholt wurde.

Eine erste Menge der ersten Formmasse wurde auf die Schnecke, die sich in einer hinteren Stellung befand und deren leerer Schneckengang an der Einführungsöffnung sichtbar war, gegeben. Dann wurde die Schnecke zum Einspritzen in eine vordere Stellung zur Düse bewegt.

Anschließend wurde eine zweite Menge der weiteren Formmasse auf die Schnecke gegeben. Die Zugabe der zweiten Menge der weiteren Formmasse wurde begonnen, während sich die Schnecke in der vorderen Position in dem Hohlzylinder befand. Die Schnecke rotierte und die erste Formmasse und die weitere Formmasse wurden plastifiziert bis die Schnecke sich wieder in der hinteren Stellung befand. Mit Abschluss des Plastifizierens wurde die Rotation der Schnecke gestoppt.

Erneut wurde dann eine erste Menge der ersten Formmasse der Schnecke zugeführt. Dann wurden die plastifizierten Formmassen in ein Spritzgusswerkzeug eingespritzt, wozu die Schnecke wieder in die vordere Stellung bewegt wurde, also vorschoss. Nach dem Einspritzen wurde erneut eine zweite Menge der weiteren Formmasse zugegeben und es wurde erneut plastifiziert.

Entsprechend hergestellte Schalen zeigten ein vergleichbares Marmorierungsmuster, also eine reproduzierbare Marmorierung.

Bei gleichem Verfahrensablauf wurde die Konfiguration der Spritzgießmaschine jeweils für die Herstellung von zehn Schalen variiert, wobei die Marmorierungsmuster für jeweils eine Konfiguration reproduzierbar waren. Es wurde jeweils eine Nadelverschlussdüse oder eine offene Düse eingesetzt. Der Düsenkopf umfasste entweder eine einzelne zentrale Bohrung, drei gerade Bohrungen, vier gerade Bohrungen, sechs gerade Bohrungen, drei jeweils als Schneckengang ausgeführte Kanäle oder drei jeweils spiralförmig gekrümmte Kanäle.

Beispiel 2 Herstellung von Messbechern

Auf einer elektrischen Spritzgussmaschine mit 1000 kN Zuhaltekraft, umfassend einen Zylinder mit 40 mm Innendurchmesser und eine offene Düse, wurden mehrfarbige, marmorierte Messbecher hergestellt. Der Verfahrensablauf entsprach im Wesentlichen dem Verfahrensablauf von Beispiel 1.

Pro Messbecher, also pro Schuss wurde jeweils eine erste Menge einer ersten Formmasse bereitgestellt. Die erste Formmasse bestand auch aus dem schwarzen Farbgranulat und die erste Menge wies eine Masse von 0,07 g auf.

Weiterhin wurde für jeden Messbecher eine zweite Menge von drei weiteren Formmassen bereitgestellt. Die zweite Menge war in drei Portionen unterteilt. Eine erste Portion der zweiten Menge enthielt eine zweite Formmasse bestehend aus 68 g eines PBT-Granulats und 0,67 g eines konzentriert blau eingefärbten PBT-Granulats. Eine zweite Portion der zweiten Menge enthielt eine dritte Formmasse bestehend aus 68 g des PBT-Granulats und 0,67 g eines konzentriert grün eingefärbten PBT-Granulats. Eine dritte Portion der zweiten Menge enthielt eine vierte Formmasse bestehend aus 68 g des PBT-Granulats und 0,67 g eines konzentriert gelb eingefärbten PBT-Granulats. Insgesamt entsprachen die bereitgestellten Formmassen der Masse des Messbechers.

Eine erste Menge der ersten Formmasse wurde auf die Schnecke, die sich in einer hinteren Stellung befand und deren leerer Schneckengang an der Einführungsöffnung sichtbar war, gegeben. Dann wurde die Schnecke zum Einspritzen von bereits auf der Schnecke befindlicher Formmasse in eine vordere Stellung zur Düse bewegt.

Nach dem Einspritzen und vor dem Beginn der Plastifizierung wurde die erste Portion der zweiten Menge hinzugegeben. Nach dem ersten Drittel der Gesamtdauer der Plastifizierung wurde die zweite Portion der zweiten Menge zugegeben. Die Plastifizierung wurde fortgesetzt und die dritte Portion der zweiten Menge wurde nach dem zweiten Drittel der Gesamtdauer der Plastifizierung zugegeben.

Nach Zugabe der dritten Portion der zweiten Menge wurde erneut eine erste Menge der ersten Formmasse zugeführt, sobald sich die Schnecke nicht mehr in Rotation und in der hinteren Stellung befand.

Bezugszeichenliste

| | |
|---|---|
| 1 | erste Formmasse |
| 3 | mindestens eine weitere Formmasse |
| 5 | Einspritzeinheit |
| 6 | Einlass |
| 7 | Schneckenspritzgussmaschine |
| 8 | Eintrittsöffnung |
| 9 | Spritzgusswerkzeug |
| 10 | Angusskanal |
| 11 | Hohlzylinder |
| 13 | Schnecke |
| 15 | Schneckenspitze |
| 17 | Düse |
| 19 | Längsachse |
| 21 | vordere Stellung |
| 23 | hintere Stellung |
| 25 | Abstand |
| 27 | Freiraum |
| 29 | Kavität |
| 31 | inneres freies Volumen |
| 33 | inneres Volumen |
| 35 | Innenraum |
| 37 | Düsenkopf |
| 38 | Durchgangsbohrung |
| 39 | Düsenkörper |
| 40 | Austrittsöffnung |
| 41 | Kanäle |
| 42 | Einsatz |
| 43 | erstes Ende |
| 44 | erste Position |
| 45 | zweites Ende |
| 47 | Meteringzone |
| 48 | zweite Position |
| 49 | Kompressionszone |
| 50 | Windungen |
| 51 | Einzugszone |
| 52 | Förderrichtung |
| 53 | Zufuhröffnung |
| 55 | erster Bereich |
| 57 | zweiter Bereich |
| 59 | Abdeckung |
| 61 | zweiter Abstand |
| 63 | Querschnittsfläche |
| 65 | Steg |
| 67 | Mittelachse |
| 75 | Spirale |
| 79 | Vollzylinder |
| 81 | zweite Endfläche |
| 83 | erste Endfläche |
| 85 | Einsatzschmelzekanal |
| 87 | erster Durchmesser |
| 89 | zweiter Durchmesser |
| 91 | Hinterschnitt |

**Patentansprüche**

1. Verfahren zur Herstellung von marmorierten Formteilen, wobei eine erste Formmasse (1) und mindestens eine weitere Formmasse (3) aus einer Einspritzeinheit (5) einer Schneckenspritzgussmaschine (7) in ein Spritzgusswerkzeug (9) eingespritzt werden, wobei die Einspritzeinheit (5) einen Hohlzylinder (11), eine Schnecke (13) mit einer Schneckenspitze (15) und eine Düse (17) umfasst und die Schnecke (13) rotierbar und in Richtung einer Längsachse (19) des Hohlzylinders (11) zwischen einer vorderen Stellung (21) und einer hinteren Stellung (23) beweglich in dem Hohlzylinder (11) angeordnet ist, wobei ein Abstand (25) zwischen der Schneckenspitze (15) und der Düse (17) in der vorderen Stellung (21) kleiner ist als in der hinteren Stellung (23),

   und wobei die erste Formmasse (1) eine erste Polymermasse und ein erstes Färbemittel enthält und die mindestens eine weitere Formmasse (3) mindestens eine weitere Polymermasse und gegebenenfalls mindestens ein weiteres Färbemittel enthält,
   umfassend die folgenden Schritte:

   a) gegebenenfalls Zuführen einer ersten Menge der ersten Formmasse (1) auf die Schnecke (13), wenn sich die Schnecke (13) in der hinteren Stellung befindet (23),
   b) Vorschießen der Schnecke (13) aus der hinteren Stellung (23) in die vordere Stellung (21),
   c) Zuführen einer zweiten Menge der mindestens einen weiteren Formmasse (3) auf die Schnecke (13),
   d) Plastifizieren der ersten Formmasse (1) und der mindestens einen weiteren Formmasse (3) in dem Hohlzylinder (11) der Schnecke (13), wobei die Schnecke (13) rotiert und zumindest ein Teil der ersten Formmasse (1) und zumindest ein Teil der mindestens einen weiteren Formmasse (3) in einen Freiraum (27) in dem Hohlzylinder (11) zwischen der Düse (17) und der Schneckenspitze (15) gefördert werden und wobei sich die Schnecke (13) von der vorderen Stellung (21) in die hintere Stellung (23) bewegt,
   e) Zuführen einer neuen ersten Menge der ersten Formmasse (1) auf die Schnecke (13), wenn sich die Schnecke (13) in der hinteren Stellung befindet (23),
   f) Einspritzen der ersten Formmasse (1) und der mindestens einen weiteren Formmasse (3) aus dem Freiraum (27) in dem Hohlzylinder (11) in eine Kavität (29) des Spritzgusswerkzeugs (9), wobei die Schnecke (13) aus der hinteren Stellung (23) in die vordere Stellung (21) vorschießt,
   g) Abkühlen der ersten Formmasse (1) und der mindestens einen weiteren Formmasse (3) in dem Spritzgusswerkzeug (9), so dass ein marmoriertes Formteil entsteht
   h) Entfernen des marmorierten Formteils aus dem Spritzgusswerkzeug (9),

   wobei die Schritte c) bis h) wiederholt werden, Schritt e) vor Schritt f) durchgeführt wird und gegebenenfalls Schritt a) vor Schritt b) durchgeführt wird und
   wobei das Zuführen der neuen ersten Menge der ersten Formmasse in Schritt e) und gegebenenfalls das Zuführen der ersten Menge der ersten Formmasse in Schritt a) zeitlich oder räumlich separat von dem Zuführen der zweiten Menge der mindestens einen weiteren Formmasse in Schritt c) durchgeführt wird, **dadurch gekennzeichnet, dass** das Zuführen der zweiten Menge der mindestens einen weiteren Formmasse (3) in Schritt c) nach dem Vorschießen in Schritt b) durchgeführt wird und die Schneckenspritzgussmaschine (7) genau eine Einspritzeinheit (5) und genau einen Hohlzylinder (11) umfasst.

2. Verfahren nach Anspruch 1, **dadurch gekennzeichnet, dass** ein Verhältnis von einem maximalen inneren freien Volumen (31) des Hohlzylinders (11), das von der erster Formmasse (1) und der mindestens einen weiteren Formmasse (3) eingenommen werden kann, zu einem inneren Volumen (33) der Kavität (29) nicht mehr als 10 beträgt.

3. Verfahren nach einem der Ansprüche 1 bis 2, **dadurch gekennzeichnet, dass** ein Verhältnis von der Summe aus der Masse der ersten Menge der ersten Formmasse (1) und der Masse der zweiten Menge der mindestens einen weiteren Formmasse (3) zu der Masse des marmorierten Formteils 0,5 bis 1,5 beträgt, wobei dieses Verhältnis größer als 1 ist, wenn bei der Herstellung des marmorierten Formteils mindestens ein Anguss vorliegt.

4. Verfahren nach einem der Ansprüche 1 bis 3, **dadurch gekennzeichnet, dass** ein Massenverhältnis von der ersten Menge zu der zweiten Menge weniger als 0,1, insbesondere weniger als 0,001 beträgt.

5. Verfahren nach einem der Ansprüche 1 bis 4, **dadurch gekennzeichnet, dass** ein Verhältnis von einer ersten Konzentration des ersten Färbemittels in der ersten Formmasse (1) zu einer weiteren Konzentration des mindestens einen weiteren Färbemittels in der mindestens einen weiteren Formmasse (3) mehr als 20 beträgt, insbesondere mehr als 50 beträgt.

**6.** Verfahren nach einem der Ansprüche 1 bis 5, **dadurch gekennzeichnet, dass** die erste Polymermasse (1) und/oder die mindestens eine weitere Polymermasse (3) ein Polymer ausgewählt aus der Gruppe bestehend aus Polypropylen (PP), Polyethylen (PE), Polyoxymethylen (POM), Polyethylenterephthalat (PET), Polybutylenterephthalat (PBT), Polyamid (PA), Polycarbonat (PC), Polyarylethersulfonen (PSU, PESU, PPSU), thermoplastischen Polyurethanen (TPU), Polybutylenadipatterephthalat (PBAT), Polybutylensuccinat (PBS), Polylactid (PLA), Poly butylen sebacat terephtalat (PBSeT), Polylacticacid (PLA), Poly ethylene naphtalate (PEN), Polyacrylmethacrylat (PMMA), Polystyrol (PS), Styrol enthaltenden Polymeren wie Acrylnitril-Butadien-Styrol-Copolymer (ABS) oder Mischungen davon enthalten.

**7.** Verfahren nach einem der Ansprüche 1 bis 6, **dadurch gekennzeichnet, dass** die erste Formmasse (1) und/oder die mindestens eine weitere Formmasse (3) jeweils als Granulat zugeführt werden.

**8.** Vorrichtung zur Herstellung von marmorierten Formteilen umfassend genau eine Einspritzeinheit (5), die einen Hohlzylinder (11) mit einem Innenraum (35), eine Schnecke (13) und eine Düse (17) umfasst,

wobei die Schnecke (13) rotierbar und in Richtung einer Längsachse (19) des Hohlzylinders (11) zwischen einer vorderen Stellung (21) und einer hinteren Stellung (23) beweglich in dem Hohlzylinder (11) angeordnet ist, wobei ein Abstand (25) zwischen der Schneckenspitze (15) und der Düse (17) in der vorderen Stellung (21) kleiner ist als in der hinteren Stellung (23)
und wobei die Düse (17), umfassend einen Düsenkopf (37) und einen Düsenkörper (39), mit dem Hohlzylinder (11) lösbar verbunden ist und der Düsenkopf (37) mindestens zwei Kanäle (41) aufweist, die an einem ersten Ende (43) jeden Kanals (41) mit einer Austrittsöffnung (40) der Düse (17) und an einem zweiten Ende (45) jeden Kanals (41) mit dem Innenraum (35) des Hohlzylinders (11) verbunden sind,
wobei die mindestens zwei Kanäle (41) gekrümmt durch den Düsenkopf (37) verlaufen, **dadurch gekennzeichnet, dass** die Vorrichtung genau einen Hohlzylinder (11) umfasst.

**9.** Vorrichtung nach Anspruch 8, **dadurch gekennzeichnet, dass** der Düsenkopf (37) 3 bis 8 Kanäle (41) aufweist.

**10.** Vorrichtung nach Anspruch 8 oder 9, **dadurch gekennzeichnet, dass** die Kanäle (41) zwischen ihrem ersten Ende (43) und ihrem zweiten Ende (45) voneinander getrennt sind.

**11.** Vorrichtung nach einem der Ansprüche 8 bis 10, **dadurch gekennzeichnet, dass** die Kanäle (41) in einem radialen Querschnitt des Düsenkopfes (37) jeweils eine runde, ellipsoide oder dreieckige Querschnittsfläche (63) aufweisen.

**12.** Vorrichtung nach einem der Ansprüche 8 bis 112, **dadurch gekennzeichnet, dass** der Düsenkopf (37) einen Einsatz (42) umfasst und die mindestens zwei Kanäle (41) in dem Einsatz (42) angeordnet sind.

**13.** Verfahren zur Herstellung der Vorrichtung nach einem der Ansprüche 8 bis 12, **dadurch gekennzeichnet, dass** zumindest der Düsenkopf (37) oder zumindest der Einsatz (42) mit einem additiven Verfahren, insbesondere mittels 3D-Druck, hergestellt wird.

**Claims**

**1.** A process for producing marbled moldings, where a first molding compound (1) and at least one further molding compound (3) are injected from an injection unit (5) of a screw injection molding machine (7) into an injection mold (9),

where the injection unit (5) comprises a barrel (11), a screw (13) having a screw tip (15) and a nozzle (17), and the screw (13) is rotatable and is disposed in the barrel (11) so as to be movable in the direction of a longitudinal axis (19) of the barrel (11) between a forward position (21) and a backward position (23),
with a smaller distance (25) between the screw tip (15) and the nozzle (17) in the forward position (21) than in the backward position (23),
and where the first molding compound (1) comprises a first polymer compound and a first colorant, and the at least one further molding compound (3) comprises at least one further polymer compound and optionally at least one further colorant,
comprising the following steps:

a) optionally feeding a first amount of the first molding compound (1) onto the screw (13) when the screw (13) is in the backward position (23),

b) advancing the screw (13) from the backward position (23) into the forward position (21),

c) feeding a second amount of the at least one further molding compound (3) onto the screw (13),

d) plastifying the first molding compound (1) and the at least one further molding compound (3) in the barrel (11) of the screw (13), with rotation of the screw (13) and conveying of at least a portion of the first molding compound (1) and at least a portion of the at least one further molding compound (3) into a clear space (27) in the barrel (11) between the nozzle (17) and the screw tip (15), and with the screw (13) moving from the forward position (21) into the backward position (23),

e) feeding a new first amount of the first molding compound (1) onto the screw (13) when the screw (13) is in the backward position (23),

f) injecting the first molding compound (1) and the at least one further molding compound (3) from the clear space (27) in the barrel (11) into a cavity (29) of the injection mold (9), with the screw (13) advancing from the backward position (23) into the forward position (21),

g) cooling the first molding compound (1) and the at least one further molding compound (3) in the injection mold (9), so as to give a marbled molding,

h) removing the marbled molding from the injection mold (9),

where steps c) to h) are repeated, step e) is conducted before step f), and step a) is optionally conducted before step b), and

where the feeding of the new first amount of the first molding compound in step e) and optionally the feeding of the first amount of the first molding compound in step a) is conducted separately in time or space from the feeding of the second amount of the at least one further molding compound in step c), wherein the feeding of the second amount of the at least one further molding compound (3) in step c) is conducted after the advancing in step b), and the injection molding machine (7) comprises exactly one injection unit (5) and exactly one barrel (11).

2. The process according to claim 1, wherein a ratio of a maximum internal free volume (31) of the barrel (11) that can be occupied by the first molding compound (1) and the at least one further molding compound (3) to an internal volume (33) of the cavity (29) is not more than 10.

3. The process according to either of claims 1 and 2, wherein a ratio of the sum total of the mass of the first amount of the first molding compound (1) and the mass of the second amount of the at least one further molding compound (3) to the mass of the marbled molding is 0.5 to 1.5, where this ratio is greater than 1 when there is at least one gate in the production of the marbled molding.

4. The process according to any of claims 1 to 3, wherein a mass ratio of the first amount to the second amount is less than 0.1, especially less than 0.001.

5. The process according to any of claims 1 to 4, wherein a ratio of a first concentration of the first colorant in the first molding compound (1) to a further concentration of the at least one further colorant in the at least one further molding compound (3) is more than 20, especially more than 50.

6. The process according to any of claims 1 to 5, wherein the first polymer compound (1) and/or the at least one further polymer compound (3) comprise a polymer selected from the group consisting of polypropylene (PP), polyethylene (PE), polyoxymethylene (POM), polyethylene terephthalate (PET), polybutylene terephthalate (PET), polyamide (PA), polycarbonate (PC), polyarylethersulfones (PSU, PESU, PPSU), thermoplastic polyurethanes (TPU), polybutylene adipate terephthalate (PBAT), polybutylene succinate (PBS), polylactide (PLA), polybutylene sebacate terephthalate (PBSeT), polylactic acid (PLA), polyethylene naphthalate (PEN), polyacrylmethacrylate (PMMA), polystyrene (PS), styrene-containing polymers such as acrylonitrile-butadienestyrene copolymer (ABS) or mixtures thereof.

7. The process according to any of claims 1 to 6, wherein the first molding compound (1) and/or the at least one further molding compound (3) are each fed in in pellet form.

8. An apparatus for production of marbled moldings, comprising exactly one injection unit (5) comprising a barrel (11) having an interior (35), a screw (13) and a nozzle (17),

where the screw (13) is rotatable and is disposed in the barrel (11) so as to be movable in the direction of a longitudinal axis (19) of the barrel (11) between a forward position (21) and a backward position (23), with a smaller distance (25) between the screw tip (15) and the nozzle (17) in the forward position (21) than in the backward position (23),

and where the nozzle (17), comprising a nozzle head (37) and a nozzle body (39), is releasably connected to the barrel (11) and the nozzle head (37) has at least two ducts (41) connected at a first end (43) of each duct (41) to an exit opening (40) of the nozzle (17), and at a second end (45) of each duct (41) to the interior (35) of the barrel (11),

where the at least two ducts (41) run in a curved manner through the nozzle head (37),

wherein the apparatus comprises exactly one barrel (11).

9.  The apparatus according to claim 8, wherein the nozzle head (37) has 3 to a ducts (41).

10. The apparatus according to claim 8 or 9, wherein the ducts (41) are separated from one another between their first end (43) and their second end (45).

11. The apparatus according to any of claims 8 to 10, wherein the ducts (41) in a radial cross section of the nozzle head (37) each have a round, ellipsoidal or triangular cross-sectional area (63).

12. The apparatus according to any of claims 8 to 112, wherein the nozzle head (37) comprises an insert (42) and the at least two ducts (41) are disposed in the insert (42).

13. A process for producing the apparatus according to any of claims 8 to 12, wherein at least the nozzle head (37) or at least the insert (42) is produced by an additive method, especially by means of 3D printing.

**Revendications**

1.  Procédé de fabrication de pièces moulées marbrées, une première masse de moulage (1) et au moins une autre masse de moulage (3) étant injectées dans un outil de moulage par injection (9) à partir d'une unité d'injection (5) d'une machine de moulage par injection à vis sans fin (7),

    l'unité d'injection (5) comprenant un cylindre creux (11), une vis sans fin (13) avec une pointe de vis sans fin (15) et une buse (17), et la vis sans fin (13) étant agencée de manière rotative et mobile dans le cylindre creux (11) dans la direction d'un axe longitudinal (19) du cylindre creux (11) entre une position avant (21) et une position arrière (23),

    une distance (25) entre la pointe de vis sans fin (15) et la buse (17) étant plus petite dans la position avant (21) que dans la position arrière (23),

    et la première masse de moulage (1) contenant une première masse polymère et un premier agent de coloration et l'au moins une autre masse de moulage (3) contenant au moins une autre masse polymère et éventuellement au moins un autre agent de coloration,

    comprenant les étapes suivantes :

    a) éventuellement, l'amenée d'une première quantité de la première masse de moulage (1) sur la vis sans fin (13) lorsque la vis sans fin (13) se trouve dans la position arrière (23),

    b) l'avance de la vis sans fin (13) de la position arrière (23) à la position avant (21),

    c) l'amenée d'une deuxième quantité de l'au moins une autre masse de moulage (3) sur la vis sans fin (13),

    d) la plastification de la première masse de moulage (1) et l'au moins une autre masse de moulage (3) dans le cylindre creux (11) de la vis sans fin (13), la vis sans fin (13) tournant et au moins une partie de la première masse de moulage (1) et au moins une partie de l'au moins une autre masse de moulage (3) étant transportées dans un espace libre (27) dans le cylindre creux (11) entre la buse (17) et la pointe de vis sans fin (15) et la vis sans fin (13) se déplaçant de la position avant (21) à la position arrière (23),

    e) l'amenée d'une nouvelle première quantité de la première masse de moulage (1) sur la vis sans fin (13) lorsque la vis sans fin (13) se trouve dans la position arrière (23),

    f) l'injection de la première masse de moulage (1) et de l'au moins une autre masse de moulage (3) à partir de l'espace libre (27) dans le cylindre creux (11) dans une cavité (29) de l'outil de moulage par injection (9), la vis sans fin (13) avançant de la position arrière (23) à la position avant (21),

    g) le refroidissement de la première masse de moulage (1) et de l'au moins une autre masse de moulage (3) dans l'outil de moulage par injection (9), de manière à obtenir une pièce moulée marbrée,

h) le retrait de la pièce moulée marbrée de l'outil de moulage par injection (9),

les étapes c) à h) étant répétées, l'étape e) étant effectuée avant l'étape f) et l'étape a) étant éventuellement effectuée avant l'étape b), et

l'amenée de la nouvelle première quantité de la première masse de moulage à l'étape e) et éventuellement l'amenée de la première quantité de la première masse de moulage à l'étape a) étant effectuées séparément dans le temps ou dans l'espace de l'amenée de la deuxième quantité de l'au moins une autre masse de moulage à l'étape c), **caractérisé en ce que** l'amenée de la deuxième quantité de l'au moins une autre masse de moulage (3) à l'étape c) est effectuée après l'avance à l'étape b) et la machine de moulage par injection à vis sans fin (7) comprend exactement une unité d'injection (5) et exactement un cylindre creux (11).

2. Procédé selon la revendication 1, **caractérisé en ce qu'**un rapport entre un volume libre intérieur maximal (31) du cylindre creux (11), qui peut être occupé par la première masse de moulage (1) et l'au moins une autre masse de moulage (3), et un volume intérieur (33) de la cavité (29) n'est pas supérieur à 10.

3. Procédé selon l'une quelconque des revendications 1 à 2, **caractérisé en ce qu'**un rapport entre la somme de la masse de la première quantité de la première masse de moulage (1) et de la masse de la deuxième quantité de l'au moins une autre masse de moulage (3) et la masse de la pièce moulée marbrée est de 0,5 à 1,5, ce rapport étant supérieur à 1 lorsqu'il y a au moins une carotte lors de la fabrication de la pièce moulée marbrée.

4. Procédé selon l'une quelconque des revendications 1 à 3, **caractérisé en ce qu'**un rapport massique entre la première quantité et la deuxième quantité est inférieur à 0,1, notamment inférieur à 0,001.

5. Procédé selon l'une quelconque des revendications 1 à 4, **caractérisé en ce qu'**un rapport entre une première concentration du premier agent de coloration dans la première masse de moulage (1) et une autre concentration du au moins un autre agent de coloration dans l'au moins une autre masse de moulage (3) est supérieur à 20, notamment est supérieur à 50.

6. Procédé selon l'une quelconque des revendications 1 à 5, **caractérisé en ce que** la première masse polymère (1) et/ou l'au moins une autre masse polymère (3) contient un polymère choisi dans le groupe constitué par le polypropylène (PP), le polyéthylène (PE), le polyoxyméthylène (POM), le polyéthylène téréphtalate (PET), le polybutylène téréphtalate (PET), le polyamide (PA), le polycarbonate (PC), les polyaryléthersulfones (PSU, PESU, PPSU), les polyuréthanes thermoplastiques (TPU), le polyadipate de butylène téréphtalate (PBAT), le polysuccinate de butylène (PBS), le polylactide (PLA), le polysébacate de butylène téréphtalate (PBSeT), le polylactide (PLA), polynaphtalate d'éthylène (PEN), polyméthacrylate d'acrylique (PMMA), polystyrène (PS), les polymères contenant du styrène tels que le copolymère d'acrylonitrile-butadiène-styrène (ABS) ou leurs mélanges.

7. Procédé selon l'une quelconque des revendications 1 à 6, **caractérisé en ce que** la première masse de moulage (1) et/ou l'au moins une autre masse de moulage (3) sont amenées chacune sous forme de granulés.

8. Dispositif pour la fabrication de pièces moulées marbrées comprenant exactement une unité d'injection (5) qui comprend un cylindre creux (11) avec un espace intérieur (35), une vis sans fin (13) et une buse (17),

la vis sans fin (13) étant rotative et étant agencée dans le cylindre creux (11) de manière mobile dans la direction d'un axe longitudinal (19) du cylindre creux (11) entre une position avant (21) et une position arrière (23), une distance (25) entre la pointe de vis sans fin (15) et la buse (17) étant plus petite dans la position avant (21) que dans la position arrière (23)

et la buse (17), comprenant une tête de buse (37) et un corps de buse (39), étant reliée de manière amovible au cylindre creux (11) et la tête de buse (37) présentant au moins deux canaux (41) qui sont reliés à une première extrémité (43) de chaque canal (41) à une ouverture de sortie (40) de la buse (17) et à une deuxième extrémité (45) de chaque canal (41) à l'espace intérieur (35) du cylindre creux (11),

les au moins deux canaux (41) s'étendant de manière incurvée à travers la tête de buse (37),

**caractérisé en ce que** le dispositif comprend exactement un cylindre creux (11).

9. Dispositif selon la revendication 8, **caractérisé en ce que** la tête de buse (37) présente 3 à 8 canaux (41).

10. Dispositif selon la revendication 8 ou 9, **caractérisé en ce que** les canaux (41) sont séparés les uns des autres entre leur première extrémité (43) et leur deuxième extrémité (45).

**11.** Dispositif selon l'une quelconque des revendications 8 à 10, **caractérisé en ce que** les canaux (41) présentent chacun une surface de section transversale (63) ronde, ellipsoïdale ou triangulaire dans une section transversale radiale de la tête de buse (37) .

**12.** Dispositif selon l'une quelconque des revendications 8 à 112, **caractérisé en ce que** la tête de buse (37) comprend un insert (42) et les au moins deux canaux (41) sont agencés dans l'insert (42).

**13.** Procédé de fabrication du dispositif selon l'une quelconque des revendications 8 à 12, **caractérisé en ce qu'**au moins la tête de buse (37) ou au moins l'insert (42) est fabriqué par un procédé additif, notamment par impression 3D.

FIG.1

FIG.2

# FIG.3

FIG.4

FIG.5

FIG.6

# FIG.7

FIG.8

FIG.9

FIG.10

FIG.11

# FIG.12

# FIG.13

# FIG.14

# FIG.15

# FIG.16

# FIG.17

# FIG.18

# FIG.19

# FIG.20

# FIG.21

# FIG.22

# FIG.23

# FIG.24

# FIG.25

# FIG.26

# FIG.27

# FIG.28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1933570 A1
- AT 406753 B
- DE 2714509 A1
- US 4176152 A
- DE 4204015 A1
- DE 102004053575 A1
- JP 2003200456 A
- JP 2005262759 A
- TW 411314 B
- DE 4332242 A1
- DE 10013617 A1
- EP 1556198 B1